(19) Europäisches Patentamt
European Patent Office
Office européen des brevets

(11) **EP 3 978 983 B1**

(12) **EUROPÄISCHE PATENTSCHRIFT**

(45) Veröffentlichungstag und Bekanntmachung des Hinweises auf die Patenterteilung:
**22.01.2025 Patentblatt 2025/04**

(21) Anmeldenummer: **21198764.9**

(22) Anmeldetag: **24.09.2021**

(51) Internationale Patentklassifikation (IPC):
*G02B 17/08* (2006.01)   *G02B 27/00* (2006.01)
*G03B 21/00* (2006.01)   *G02B 26/08* (2006.01)
*G03B 21/20* (2006.01)   *H04N 9/31* (2006.01)

(52) Gemeinsame Patentklassifikation (CPC):
**G02B 27/0025; G02B 17/0852; G02B 17/0888; G03B 21/005; G03B 21/2053; G03B 21/206; G03B 21/2066; H04N 9/3126;** G02B 26/0833

(54) **PROJEKTIONSSYSTEM**

PROJECTION SYSTEM

SYSTÈME DE PROJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.09.2020 DE 102020125572**

(43) Veröffentlichungstag der Anmeldung:
**06.04.2022 Patentblatt 2022/14**

(73) Patentinhaber: **Carl Zeiss Jena GmbH 07745 Jena (DE)**

(72) Erfinder: **Pretorius, Marco 73447 Oberkochen (DE)**

(74) Vertreter: **Patentanwälte Geyer, Fehners & Partner mbB Perhamerstrasse 31 80687 München (DE)**

(56) Entgegenhaltungen:
**DE-A1- 102008 029 789    DE-A1- 102012 217 329**

# EP 3 978 983 B1

**Beschreibung**

Die vorliegende Erfindung betrifft ein Projektionssystem gemäß dem Oberbegriff des Anspruches 1. Ein solches Projektionssystem ist beispielsweise aus der DE 10 2008 029 789 A1 bekannt.

Bei einem solchen Projektionssystem wird durch die optische Hintereinanderschaltung zweier Kippspiegelmatrizen der Vorteil erreicht, dass der Schwarzlichtpegel im projizierten Bild (also die Resthelligkeit eines an sich schwarzen Bildpunktes) im Vergleich zu Projektionssystemen mit nur einer einzigen Kippspiegelmatrix deutlich verringert werden kann.

Im Kern besteht bei dem Projektionssystem der DE 10 2008 029 789 A1 die optische Lösung darin, die zwei Kippspiegelmatrizen mittels einer Planprismengruppe, einer Plankonvexlinse mit meridionalsymmetrischer Freiformfläche, und einer rückwärtig verspiegelten Meniskuslinse im Abbildungsmaßstab 1:1 pixeltreu, d.h. mit geringster Verzeichnung, aufeinander abzubilden.

Will man eine derartige Anordnung nun mit deutlich größeren Bildgebern bzw. Modulatoren, wie z.B. Kippspiegelmatrizen, verwenden, wachsen die Größe der Prismen und der Abstand zwischen den Mittelpunkten der Bildgeber im entfalteten Strahlengang ebenfalls proportional an. Da in der DE 10 2008 029 789 A1 davon ausgegangen wird, dass die beiden Kippspiegelmatrizen Teil einer gemeinsamen Objekt- und Bildebene einer monozentrischen Abbildungsoptik sind, ist dies äquivalent dazu, dass das Objekt-/Bildfeld dieser Optik ebenfalls proportional zur Größe der Bildgeber anwächst. Für größere Objektfelder begrenzt jedoch Verzeichnung höherer Ordnung sehr abrupt die Pixeltreue der 1:1-Abbildung und stört daher die kontraststeigernde Wirkung der Doppelmodulation. Für ein nach dem bisherigen Stand der Technik ausgelegtes System besteht somit der einzige Ausweg zur Lösung dieses Schwierigkeit (gewünschte 4K-Auflösung und somit der notwendige Einsatz deutlich größeren Kippspiegelmatrizen mit Kantenlängen von 31mm $\times$ 16,4mm) darin, auch alle übrigen Abstände des Zwischenabbildungssystems proportional mit der Größe der Kippspiegelmatrizen zu skalieren, so dass sich eine Baugröße der gesamten Optik von über 650mm ergeben würde. Ohne diese Skalierung würde die Verzeichnung für die von der Symmetrieebene am weitesten entfernten Kippspiegel der Kippspiegelmatrizen in einer Verzeichnung resultieren, die größer als der Abstand zweier benachbarter Kippspiegel (Pixel) ist, wodurch die pixeltreue Zuordnung verloren ginge.

Ausgehend hiervon ist es Aufgabe der Erfindung, das Projektionssystem der eingangs genannten Art so weiterzubilden, dass ein kompakter optischer Aufbau bei gleichzeitig guter Abbildungsqualität realisiert werden kann, selbst wenn die Modulatoren größere Modulatorflächen aufweisen.

Die Aufgabe wird bei dem Projektionssystem der eingangs genannten Art dadurch gelöst, dass die konvexe Seite der ersten Linse der Zwischenabbildungsoptik als Freiformfläche ausgebildet ist, die nicht sphärisch und nicht rotationssymmetrisch ist und die keine Spiegelsymmetrie aufweist. Somit kann die Freiformfläche als nicht-meridionalsymmetrische Freiformfläche und als nicht-sagitalsysmmetrische Freiformfläche bezeichnet werden.

Mit dieser erfindungsgemäßen Lösung kann z.B. annähernd die ursprüngliche Baugröße (mit kleineren Modulatoren) beibehalten und dennoch eine weitgehend pixeltreue Abbildung ermöglicht werden. Es werden erfindungsgemäß die beiden Modulatoren nicht mehr als Ausschnitte einer gemeinsamen Objekt- bzw. Bildebene einer monozentrischen Optik aufgefasst und insbesondere wird die Meridionalsymmetrie, d.h. die Spiegelsymmetrie um die Ebene, die senkrecht zur Verbindungsgeraden der Mittelpunkte der Modulatoren durch deren Mitte verläuft, aufgegeben.

Die konvexe Fläche der ersten Linse (die in den bisher bekannten Projektionssystemen gemäß der DE 10 2008 029 789 A1 als meridionalsymmetrische Freiformfläche ausgebildet ist) kann durch eine verallgemeinerte Freiformfläche beschrieben werden, die auch in der x-Koordinate (wobei die x-Koordinatenachse parallel zur Verbindungsgeraden der beiden Mittelpunkte der Modulatoren orientiert ist) ungerade Entwicklungsterme benutzt. Die nachfolgende allgemeine Formel zur Beschreibung einer Freiformfläche

$$z = \frac{(x^2 + y^2)/R}{1 + \sqrt{1 - (1+k) \cdot \frac{(x^2 + y^2)}{R^2}}} + \sum_{m,n=1}^{\infty} C_{m,n} \frac{1}{N_{Radius}^{n+m}} x^m y^n$$

enthält somit erfindungsgemäß nun auch in x ungerade Potenzen. Die zusätzlich gewonnenen Freiheitsgrade erlauben insbesondere eine deutlich bessere Korrektur der Verzeichnung, aber auch eine zusätzliche Verbesserung der Abbildungsgüte (Wellenfrontfehler) gegenüber einer nach der DE 10 2008 029 789 A1 meridionalsymmetrisch ausgelegten Zwischenabbildungsoptik.

Die erste Linse kann insbesondere als Plankonvexlinse ausgebildet sein.

Die Zwischenabbildungsoptik kann ferner eine rückseitig verspiegelte Linse (insbesondere eine Konkav-Konvex-Linse, deren konvexe Seite verspiegelt ist) aufweisen.

Bei dem erfindungsgemäßen Projektionssystem kann die Abweichung der konvexen Seite der ersten Linse von einer spiegelsymmetrischen Ausbildung bezogen auf die y-z-Ebene eines rechtshändigen kartesischen Koordinatensystems definiert werden. Dabei fällt die x-Achse des rechtshändigen kartesischen Koordinatensystems mit einer gedachten geraden Verbindungslinie, die einen Mittelpunkt der ersten Modulatorfläche und einen Mittelpunkt des durch die Zwischenabbildungsoptik abgebildeten Bildes der ersten Modulatorfläche verbindet, zusammen. Die z-Achse steht im entfalteten Zustand etwaiger planer Reflexionsflächen sämtlicher optischer Elemente im Strahlengang zwischen den beiden Modulatoren (das bedeutet insbesondere, dass bei dieser Betrachtung keine Strahlengangfaltungen an ebenen reflektiven Flächen vorliegen, da der entfaltete Zustand betrachtet wird) senkrecht auf einer Bezugsebene, in der die erste Modulatorfläche liegt, und teilt die gedachte gerade Verbindungslinie als Mittelsenkrechte in zwei gleich lange Strecken. Die Abweichung der konvexen Seite kann dann als maximaler Wert des jeweiligen Betrages von Differenzen der z-Werte der konvexen Seite von jeweils zwei zur y-z-Ebene symmetrisch liegenden Punkten auf der konvexen Seite der ersten Linse definiert werden, wobei die Abweichung der konvexen Seite der ersten Linse von einer spiegelsymmetrischen Ausbildung bezogen auf die y-z-Ebene des rechtshändigen kartesischen Koordinatensystems so ausgelegt ist, dass der maximale Wert größer oder gleich 1 $\mu$m sowie kleiner oder gleich 100 $\mu$m ist. Der maximale Wert kann auch größer oder gleich als 3 $\mu$m sowie kleiner oder gleich 20 $\mu$m sein.

Ferner kann die Zwischenabbildungsoptik so ausgelegt sein, dass das Verhältnis aus halbem Durchmesser eines gedachten kleinsten Kreises, der die komplette erste Modulatorfläche und das gesamte durch die Zwischenabbildungsoptik abgebildete Bild der ersten Modulatorfläche umgibt, zur maximalen Ausdehnung eines gedachten kleinsten Quaders, der die optisch genutzten Bereiche sämtlicher optischer Elemente zwischen den beiden Modulatoren einschließlich der beiden Modulatoren einschließt, größer oder gleich 0,06 sowie kleiner oder gleich 0,25 ist. Bevorzugt kann das Verhältnis kleiner oder gleich 0,20; 0,19; 0,18; 0,17; 0,16; 0,15; 0,14; 0,13 oder 0,12 sein. Ferner kann das Verhältnis größer oder gleich 0,07; 0,08; 0,09; 0,10; 0,11; 0,12; 0,13; 0,14 oder 0, 15 sein.

Die Zwischenabbildungsoptik kann so ausgelegt sein, dass sie die Abbildung der ersten Modulatorfläche auf die zweite Modulatorfläche bewirkt, wenn die erste und zweite Modulatorfläche jeweils eine rechteckige Oberfläche von mindestens 31 mm x 16,4 mm ist.

Insbesondere kann die Zwischenabbildungsoptik als 1:1-Abbildungsoptik ausgebildet sein. Ferner kann die Zwischenabbildungsoptik eine Verzeichnungskorrektur aufweisen, bei der der verbleibende Verzeichnungsfehler kleiner als 5 $\mu$m oder kleiner als eine maximale Ausdehnung eines Pixels des ersten oder zweiten Modulators ist.

Die maximale Ausdehnung eines gedachten kleinsten Quaders, der die optisch genutzten Bereiche sämtlicher optischer Elemente zwischen den beiden Modulatoren sowie die beiden Modulatoren selbst einschließt, kann kleiner oder gleich 500 mm betragen.

Die erste und zweite Linse können aus dem gleichen Material hergestellt sein.

Es kann zwischen den Modulatoren einerseits und der Zwischenabbildungsoptik andererseits eine Umlenkoptik angeordnet sein. Die Umlenkoptik kann so ausgebildet sein, dass mindestens eine Strahlengangfaltung zwischen dem ersten Modulator und der Zwischenabbildungsoptik (z.B. durch innere Totalreflexion) bewirkt wird. Ferner kann die Umlenkoptik so ausgebildet sein, dass mindestens eine Strahlengangfaltung zwischen dem zweiten Modulator und der Zwischenabbildungsoptik (z.B. durch innere Totalreflexion) bewirkt wird.

Insbesondere kann die Umlenkoptik den Strahlengang zwischen der Zwischenabbildungsoptik und jedem Modulator jeweils zweimal falten.

Die erste Linse und die Umlenkoptik können aus dem gleichen Material hergestellt sein. Die Zwischenabbildungsoptik kann eine Aperturblende aufweisen, die mit der Normalen der Modulatorfläche des ersten Modulators ohne Berücksichtigung etwaiger Strahlengangfaltungen einen Winkel von ungleich 90° einschließt und/oder in y-Richtung dezentriert ist. Dies ist insbesondere von Vorteil, wenn als Modulatoren Kippspiegelmatrizen verwendet werden, da dadurch die Bündel auf die (aufgrund der Kippwinkel der Kippspiegelmatrizen) verkippt zur Modulatorfläche verlaufenden Kegel begrenzt werden können. Damit ist eine verbesserte Falschlichtunterdrückung möglich.

Unter Strahlengangfaltungen werden hier alle Strahlengangfaltungen verstanden, die keine abbildende Eigenschaft aufweisen. Es handelt sich damit also um Strahlengangfaltungen an ebenen (bevorzugt reflektiven) Flächen. Diese Strahlengangfaltungen dienen zur Erhöhung der Kompaktheit der Vorrichtung, haben aber keinen Einfluss auf die Abbildungsgüte der Zwischenabbildungsoptik, so dass die Kippung der Aperturblende auf die Modulatorfläche ohne etwaige Strahlengangfaltungen (und somit mit entfalteter Optik, die zwischen dem ersten Modulator und der Aperturblende liegt) bezogen ist.

Der erste und zweite Modulator kann jeweils als flächiger Modulator, der reflektiv oder transmissiv ist, ausgebildet sein. Die Pixel können in Zeilen und Spalten angeordnet sein. Beispielseise kann der erste und zweite Modulator als LCD-Modulator, als LCoS-Modulator oder als Kippspiegelmatrix ausgebildet sein. Ferner können der erste und zweite Modulator bevorzugt gleich ausgebildet sein.

Jede Kippspiegelmatrix weist mehrere Kippspiegel auf, deren Kippachsen in einer Modulatorfläche liegen. Wenn das Projektionssystem eine 4K-Auflösung bereitstellen soll, können die Kippspiegelmatrizen jeweils 3840 x 2160 Kippspiegel aufweisen. Die Modulatorfläche kann dann z.B. 31 mm x 16,4 mm betragen.

Bei dem erfindungsgemäßen Projektionssystem kann die Modulatorfläche der ersten Kippspiegelmatrix in einer Modulatorebene und die Modulatorfläche der zweiten Kippspiegelmatrix in der Modulatorebene oder einer dazu parallelen Ebene angeordnet sein und kann zwischen den Kippspiegelmatrizen einerseits und der Zwischenabbildungsoptik andererseits eine Umlenkoptik angeordnet sein, die den Strahlengang zwischen der Zwischenabbildungsoptik und der jeweiligen Kippspiegelmatrix zumindest einmal faltet.

Mit dieser Umlenkoptik kann eine kompakte Ausbildung des Projektionssystems sichergestellt werden. Insbesondere besteht genügend Platz für die notwendige Ansteuerelektronik der Kippspiegelmatrizen, so dass die Ansteuerelektroniken nicht in den Bereich der Zwischenabbildungsoptiken, der für die Abbildung benötigt wird, hineinstehen.

Ferner können die beiden Kippspiegelmatrizen so angeordnet sein, dass die erste Modulatorfläche der ersten Kippspiegelmatrix in einer ersten Ebene und die zweite Modulatorfläche der zweiten Kippspiegelmatrix in einer zweiten Ebene liegt, wobei die erste und zweite Ebene zueinander verkippt sind, so dass sie weder parallel zueinander verlaufen noch zusammenfallen. Der Kippwinkel ist somit größer als 0° und bevorzugt kleiner als 5°, kleiner als 4°, kleiner als 3°, kleiner als 2° oder kleiner als 1°. Damit liegt ein weiterer Freiheitsgrad vor, der zur Optimierung der Abbildungsqualität genutzt werden kann. Insbesondere kann er zur Kalibrierung der Verzeichnung genutzt werden.

Die Modulatoren (insbesondere die Kippspiegelmatrizen) können jeweils eine rechteckige Modulatorfläche aufweisen, in der die Pixel angeordnet sind. Im entfalteten Zustand der Umlenkoptik können die Modulatoren in der x-y-Ebene insbesondere so angeordnet sein, dass eine Seite der rechteckigen Modulatorfläche mit der y-Achse einen Winkel aus dem Bereich von 10° bis 45° aufweist. Bevorzugt sind die Winkel für beide Modulatorflächen gleich, so dass die entsprechenden Seiten der beiden Modulatorflächen parallel zueinander verlaufen. Insbesondere kann die Zwischenabbildungsoptik nur die Plankonvex-Linse und die rückseitenverspiegelte Linse aufweisen.

Die rückseitenverspiegelte Linse weist bevorzugt nur sphärische Grenzflächen auf.

Beim erfindungsgemäßen Projektionssystem kann ein Beleuchtungsmodul vorgesehen sein, das die erste Kippspiegelmatrix so mit Licht beleuchtet, dass die Lichtbeaufschlagung senkrecht zur Modulatorfläche der ersten Kippspiegelmatrix erfolgt, und kann die Zwischenabbildungsoptik das von den sich in der ersten Kippstellung befindenden Kippspiegeln der ersten Kippspiegelmatrix reflektierte Licht unter einem solchen Winkel auf die zweite Kippspiegelmatrix abbilden, dass das von den sich in der ersten Kippstellung befindenden Kippspiegeln der zweiten Kippspiegelmatrix reflektierte Licht senkrecht zur Modulatorfläche der zweiten Kippspiegelmatrix verläuft.

Damit werden die durch die Kippstellungen vorgegebenen Winkel optimal ausgenutzt. Insbesondere ist die Zwischenabbildungsoptik leichter zu justieren. Auch kann eine der zweiten Kippspiegelmatrix nachgeordnete Projektionsoptik leichter justiert werden, da das von den sich in der erste Kippstellung befindenden Kippspiegeln reflektierte Licht senkrecht zur Modulatorfläche der zweiten Kippspiegelmatrix verläuft.

Das Beleuchtungsmodul kann die erste Kippspiegelmatrix z.B. zeitsequentiell mit Licht unterschiedlicher Farbe (z.B. rot, grün und blau) beaufschlagen. Der Wechsel zwischen den Farben erfolgt bevorzugt so schnell, dass ein Betrachter die zeitsequentiell erzeugten roten, grünen und blauen Bilder nicht voneinander unterscheiden kann, sondern nur die Überlagerung als mehrfarbige Projektion wahrnimmt.

Das Projektionssystem kann eine Projektionsoptik aufweisen, mit der das von der zweiten Kippspiegelmatrix kommenden Licht, dass zu projizieren ist, auf eine Projektionsfläche projiziert wird bzw. projiziert werden kann.

Das erfindungsgemäße Projektionssystem kann insbesondere als Projektor für Anwendungen ausgebildet sein, bei denen das zu projizierende Bild auf eine plane Projektionsfläche oder eine gekrümmte Projektionsfläche projiziert wird. Die gekrümmte Projektionsfläche kann z.B. Teil einer Planetariumskuppel oder Teil eines Simulators (z.B. für Flugzeuge, Helikopter, Autos, LKWs, Motorräder, sonstige Fahrzeuge, etc.) sein. Wenn die Projektion im Dunklen erfolgt, bringt die erreichte Schwarzpegelreduzierung eine deutliche Bildverbesserung mit sich.

Das Projektionssystem kann ferner als Projektor für die Frontprojektion oder als Projektor für die Rückprojektion ausgebildet sein. Die Projektionsfläche kann Bestandteil des Projektors sein.

Die Zwischenabbildungsoptik und/oder die Umlenkoptik kann für das vom Licht durchlaufenden Material ein einziges Material nutzen. So können die Linsen der Zwischenabbildungsoptik und die Umlenkprismen der Umlenkoptik aus dem gleichen Material hergestellt sein.

Die Zwischenabbildungsoptik kann insbesondere für den sichtbaren Wellenlängenbereich (400 bis 750 nm) ausgelegt sein. Ferner kann die Zwischenabbildungsoptik für den sichtbaren Wellenlängenbereich bis in nahe Infrarot (400 nm - 1500 nm) ausgelegt sein.

Ferner kann das Projektionssystem noch weitere, dem Fachmann bekannte Teile bzw. Module aufweisen, damit das gewünschte Bild projiziert werden kann.

Weiterbildungen des erfindungsgemäßen Projektionssystems sind in den abhängigen Ansprüchen angegeben.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:

Fig. 1 eine schematische Ansicht einer Ausführungsform des erfindungsgemäßen Projektors;

Fig. 2 eine schematische Darstellung zur Erläuterung der Lichtmodulation mit den beiden Kippspiegelmatrizen 3, 5 des Projektors 1 von Fig.1;

Fig. 3 eine perspektivische Ansicht der Zwischenabbildungsoptik 4 des Projektors 1 von Fig. 1;

Fig. 4 eine Draufsicht der Zwischenabbildungsoptik 4 des Projektors1 von Fig. 1;

Fig. 5 eine Seitenansicht der Zwischenabbildungsoptik des Projektors 1 von Fig. 1;

Fig. 6 die Strahlverläufe des entfalteten Strahlengangs des ersten Ausführungsbeispiels im xz-Schnitt;

Fig. 7 die Strahlenverläufe des entfalteten Strahlengangs des ersten Ausführungsbeispiels im yx-Schnitt;

Fig. 8-12 zeigen Queraberrationskurven im xz-Schnitt (linke Spalte) und im yz-Schnitt (rechte Spalte) für 25 verschiedene Feldbündel;

Fig. 13 die Strahlverläufe des entfalteten Strahlengangs des zweiten Ausführungsbeispiels im xz-Schnitt;

Fig. 14 die Strahlenverläufe des entfalteten Strahlengangs des zweiten Ausführungsbeispiels im yx-Schnitt, und

Fig. 15-19 zeigen Queraberrationskurven im xz-Schnitt (linke Spalte) und im yz-Schnitt (rechte Spalte) für 25 verschiedene Feldbündel;

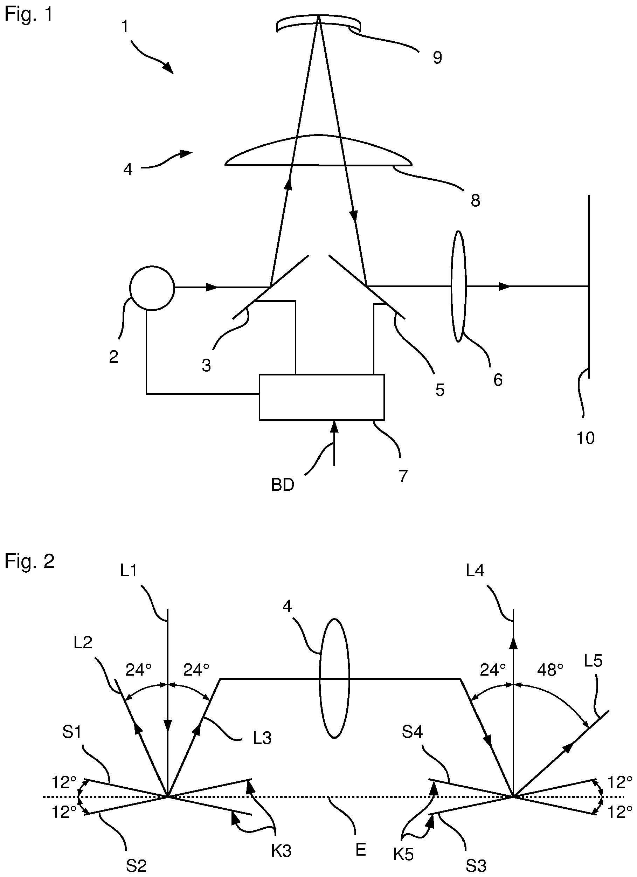

Bei der in Fig. 1 schematisch gezeigten Ausführungsform umfasst der erfindungsgemäße Projektor 1 zum Projizieren eines Bildes eine Lichtquelle 2, einen Beleuchtungsmodulator 3, eine Zwischenabbildungsoptik 4, einen Bildmodulator 5, eine Projektionsoptik 6 sowie eine Steuereinheit 7.

Die beiden Modulatoren 3, 5 sind jeweils als Kippspiegelmatrix ausgebildet, die n x m Kippspiegel in Spalten und Zeilen aufweisen, wobei die Kippspiegel voneinander unabhängig in eine erste und in eine zweite Kippstellung gebracht werden können.

Die Zwischenabbildungsoptik 4 ist als 1:1-Abbildungsoptik mit einer ersten Linse 8, die eine konvexe Seite aufweist (hier eine Plankonvex-Linse 8) und einer zweiten rückseitenverspiegelten Linse 9 ausgebildet und bildet jeden Kippspiegel des Beleuchtungsmodulators 3 genau auf einen Kippspiegel des Bildmodulators 5 ab, so dass zu jedem Kippspiegel (nachfolgend auch Beleuchtungspixel genannt) des Beleuchtungsmodulators 3 genau ein Kippspiegel (nachfolgend auch Bildpixel genannt) des Bildmodulators 5 zugeordnet ist. Es sind auch andere Zuordnungen von Bild- und Beleuchtungspixeln möglich. So kann z. B. ein Versatz in Zeilenrichtung so bewirkt werden, dass jedes Bildpixel durch zwei Beleuchtungspixel (jeweils zur Hälfte) beleuchtet wird.

Die beiden Modulatoren 3 und 5 werden von der Steuereinheit 7 basierend auf zugeführten Bilddaten BD so angesteuert, dass der Beleuchtungsmodulator 3, der mit dem Licht (z.B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 10 projiziert wird.

Der Beleuchtungsmodulator 3 kann so angesteuert werden, dass nur das von den Kippspiegeln des Beleuchtungsmodulators 3 reflektierte Licht, die einem Kippspiegel des Bildmodulators 5 zugeordnet sind, der eine nicht schwarzen Bildpunkt im Bild erzeugen soll, auf den Bildmodulator 5 abgebildet wird. Dadurch kann erreicht werden, dass Bildpixel des Bildmodulators 5, die schwarze Bildpunkte darstellen sollen, nicht mit Licht beaufschlagt werden (da die zugeordneten Beleuchtungspixel bzw. das von diesen reflektierte Licht nicht auf dem Bildmodulator 5 abgebildet wird). Dies führt vorteilhaft dazu, dass der Schwarzpegel (also die unerwünschte Resthelligkeit eines schwarzen Bildpunktes im tatsächlich projizierten Bild) deutlich reduziert werden kann.

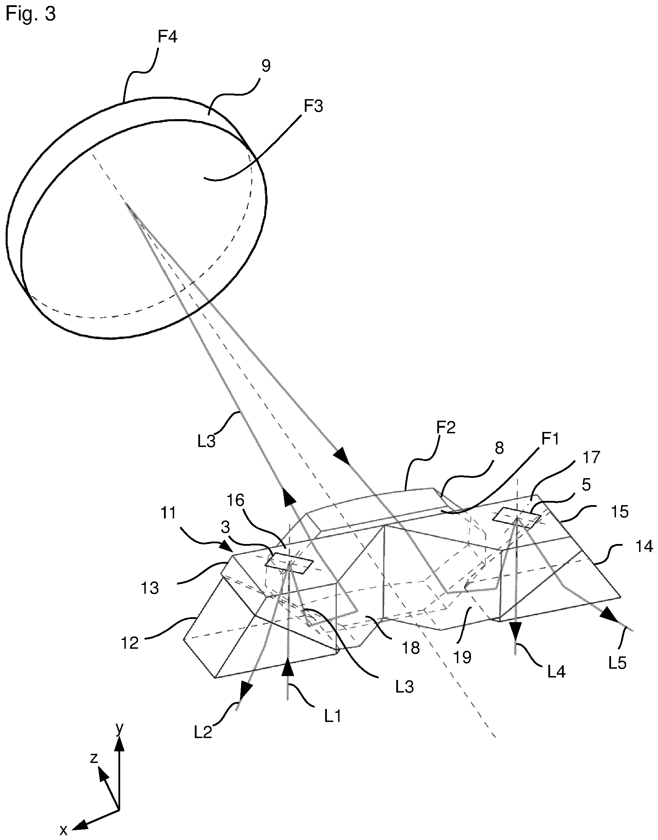

Bevor die in Fig. 3 bis 5 gezeigte konkrete Ausbildung der Zwischenabbildungsoptik 4 sowie die Anordnung der beiden Kippspiegelmatrizen 3 und 5 näher beschrieben wird, soll zunächst in Verbindung mit der schematischen Darstellung von Fig. 2 erläutert werden, wie die Lichtmodulation mit den beiden Kippspiegelmatrizen 3 und 5 bewirkt wird.

In Fig. 2 ist stellvertretend für jede Kippspiegelmatrix 3, 5 jeweils nur ein einziger Kippspiegel K3, K5 in seinen beiden möglichen Kippstellungen eingezeichnet. Die Kippspiegel K3 und K5 sind in einer Schnittdarstellung gezeigt, die so gewählt ist, dass die jeweilige Kippachse der beiden Kippspiegel K3 und K5 senkrecht zur Zeichenebene verläuft. Nachdem die beiden Modulatoren 3 und 5 in einer gemeinsamen Ebene E (nachfolgend auch als Bezugsebene E bezeichnet) liegen, liegen die Kippachsen der Kippspiegel K3 und K5 in dieser Ebene E, die in der Schnittdarstellung von Fig. 2 als gestrichelte Linie dargestellt ist.

Der Kippspiegel K3 des Modulators 3 kann entweder in seiner ersten Kippstellung S1 oder in einer zweiten Kippstellung S2 stehen. Beide Kippstellungen sind um 12° gegenüber der Ebene E geneigt. In Fig. 2 sind zwar beide Kippstellungen S1 und S2 eingezeichnet. Natürlich kann der Kippspiegel K3 zu einem Zeitpunkt immer nur in einer der beiden Kippstellungen S1, S2 stehen. Gleiches gilt für den Kippspiegel K5 des Bildmodulators 5. Der Kippspiegel K5 kann entweder in seiner ersten Stellung S3 oder in seiner zweiten Stellung S4 stehen.

Im Betrieb des Projektors 1 wird der Kippspiegel K3 mit Licht L1 der Lichtquelle 2 so beaufschlagt, dass das Licht L1 senkrecht zur Ebene E auf den Kippspiegel K3 trifft. Wenn der Kippspiegel K3 in seiner zweiten Stellung S2 steht, wird das Licht, da der Kippspiegel K3 relativ zur Ebene E gegen den Uhrzeigersinn um 12° verkippt ist, unter einem Winkel von 24° zur Einfallsrichtung des Lichtes L1 als sogenanntes Aus-Licht L2 auf eine nicht gezeigte Strahlfalle reflektiert. Dieses Aus-Licht L2 wird nicht zur Beleuchtung des Bildmodulators 5 verwendet.

Wenn jedoch der Kippspiegel K3 in seiner ersten Stellung S1 steht, wird das Licht als sogenanntes Ein-Licht L3 unter einem Winkel von 24° relativ zur Einfallsrichtung des Lichtes L1 reflektiert. Dieses Ein-Licht L3 wird, wie nachfolgend noch detaillierter beschrieben wird, mittels der Zwischenabbildungsoptik 4 auf den zugeordneten Kippspiegel K5 des Bildmodulators 5 abgebildet. Die Einfallsrichtung des Ein-Lichtes L3 auf den Kippspiegel K5 ist dabei so gewählt, dass das reflektierte Licht L4, wenn der Kippspiegel K5 in seiner ersten Stellung S3 steht, senkrecht zur Ebene E verläuft. Dazu weist das auf den Kippspiegel K5 einfallende Licht L3 einen Winkel von 24° zum Lot auf die Ebene E auf. Dies führt bei der ersten Kippstellung S3 des Kippspiegels K5 zu der gewünschten Reflexion, so dass das Licht als Ein-Licht L4 mittels der Projektionsoptik 6 auf die Projektionsfläche 10 projiziert werden kann.

Wenn der zweite Kippspiegel K5 in seiner zweiten Kippstellung S4 steht, wird das Licht unter einem Winkel von 48° relativ zum Lot auf die Ebene E als Aus-Licht L5 reflektiert. Dieses Aus-Licht wird in eine Strahlfalle (nicht gezeigt) geleitet und wird bei der Bildprojektion auf die Projektionsfläche 10 nicht verwendet.

In dieser Art und Weise kann mittels der ersten Kippspiegelmatrix 3 die flächig modulierte Lichtquelle bereitgestellt werden, bei der zumindest alle Kippspiegel des Beleuchtungsmodulators 3, die auf einen Kippspiegel des Bildmodulators 5 abgebildet werden, der einen nicht schwarzen Bildpunkt darstellen soll, in die erste Kippstellung gebracht werden. Mittels des Bildmodulators 5 können dann die beleuchteten Kippspiegel K5 so in ihre erste und zweite Kippstellung geschaltet werden, das während der Dauer T einer Einzelbilddarstellung die gewünschte Helligkeit des entsprechenden Bildpunktes erzeugt wird. Die Helligkeit kann durch das Verhältnis der Zeitdauern, während denen der Kippspiegel K5 in seiner ersten Stellung steht und während denen der Kippspiegel K5 in seiner zweiten Stellung steht, eingestellt werden. Die Ansteuerung der beiden Modulatoren erfolgt mit pulsweitenmodulierten Steuerdaten, die die Steuereinheit 7 basierend auf den zugeführten Steuerdaten BD erzeugt.

Wie den Fig. 3 bis 5 zu entnehmen ist, ist zwischen der Zwischenabbildungsoptik 4, die die Plankonvexlinse 8 und die rückseitenverspiegelte Linse 9 umfasst, und den beiden Modulatoren 3, 5 ein Strahltrennmodul 11 (das nachfolgend auch als Umlenkoptik bezeichnet wird) angeordnet, das das von den Modulatoren 3, 5 reflektierte Ein-Licht L3, L4 vom von den Modulatoren 3, 5 reflektierten Aus-Licht L2, L5 trennt. Dazu umfasst das Strahlmodul ein erstes und zweites Prisma 12, 13 für den Beleuchtungsmodulator 3 sowie ein drittes und viertes Prisma 14, 15 für den Bildmodulator 5.

Auf der Oberseite 16, 17 des zweiten und vierten Prismas 13, 15 ist jeweils einer der Modulatoren 3, 5 angeordnet. Die Oberseiten 16, 17 liegen so in der gleichen Ebene, dass die Kippspiegel bzw. die Kippachsen der Kippspiegel der beiden Modulatoren 3, 5 in der gemeinsamen Ebene E liegen. Da die Kippachsen der Kippspiegel diagonal zu dem rechteckigen Bereich, in dem die Kippspiegel in Zeilen und Spalten angeordnet sind, verlaufen, sind die beiden Modulatoren 3, 5 so in der Ebene E gedreht auf den Oberseiten 16 und 17 angeordnet, dass die Kippachsen der Kippspiegel sich in der z-Richtung erstrecken.

Die Prismen 12 und 13, die aus demselben Material bestehen, sind voneinander durch einen dünnen Luftspalt (ca. 3 - 6 $\mu$m) getrennt, so dass das Ein-Licht L3 vom Beleuchtungsmodulator 3 aufgrund innerer Totalreflexion an der Grenzfläche des Prismas 13 zum Luftspalt in der xy-Ebene zur rechten Seitenfläche 18 des Prismas 13 reflektiert wird (das vom Beleuchtungsmodulator 3 kommende Ein-Licht und das aufgrund innerer Totalreflexion reflektierte Ein-Licht L3 liegen in der xy-Ebene). Die rechte Seitenfläche 18 ist verspiegelt und relativ zum auf sie fallenden Ein-Licht L3 um 45° geneigt, so dass an der rechten Seite 18 eine 90°-Umlenkung in der xz-Ebene in Richtung zur Zwischenabbildungsoptik 4 hin stattfindet.

Das Aus-Licht L2 des Beleuchtungsmodulators 3 wird hingegen nicht an der Grenzfläche des Prismas 13 zum Luftspalt reflektiert, sondern läuft durch diese, den Luftspalt sowie das erste Prisma 12 hindurch und wird dann von einer nicht gezeigten Strahlfalle aufgefangen. Somit wird durch die beiden Prismen 12 und 13 und dem dazwischen vorgesehenen Luftspalt eine Trennung des Ein- und des Aus-Lichtes bewirkt.

Das dritte und vierte Prisma 14, 15 sind im Wesentlichen spiegelsymmetrisch relativ zur yz-Ebene zu dem ersten und zweiten Prisma 12, 13 ausgebildet. Auch hier ist wiederum ein dünner Luftspalt zwischen beiden Prismen 14, 15 vorhanden. Wie dem Strahlenverlauf in Fig. 3 zu entnehmen ist, wird das von der Zwischenabbildungsoptik 4 kommende Ein-Licht L3 an der linken verspiegelten Seitenfläche 19 des vierten Prismas 15 um 90° in der xz-Ebene reflektiert und dann aufgrund innerer Totalreflexion an der Grenzfläche des vierten Prismas 15 zum Luftspalt in der xy-Ebene nach oben auf den Bildmodulator 5 so reflektiert, dass das Ein-Licht L3 unter einem Winkel von 24° relativ zur Normalen auf die Ebene E auf den Bildmodulator 5 trifft. Das Ein-Licht vom Bildmodulator 5 verläuft senkrecht zur Ebene E in der y-Richtung durch die beiden Prismen 15 und 14 und dem dazwischen liegenden Luftspalt hindurch und wird dann mittels der in den Fig. 3 bis 5 nicht gezeigten Projektionsoptik 6 auf die Projektionsfläche 10 projiziert. Das Aus-Licht L5 wird hingegen unter einem Winkel von 48° relativ zum Lot auf die Ebene E von dem Modulator 5 reflektiert und wird nach Durchlaufen der Prismen 15 und 14 und Luftspalt von einer nicht gezeigten Strahlfalle aufgefangen.

Mittels dem Strahltrennmodul 11 ist eine sehr kompakte Anordnung der beiden Modulatoren 3, 5 möglich. Auch die Strahltrennung von Ein- und Aus-Licht lässt sich leicht verwirklichen, so dass noch ausreichend Platz für z.B. die Projektionsoptik 6 vorhanden ist.

Das Strahlenmodul 11 bzw. zumindest die Prismen 12 und 13 sorgen zusammen mit der Lichtquelle 2 dafür, dass der erste Modulator 3 senkrecht mit dem Licht L1 beleuchtet wird und können daher auch als Beleuchtungsmodul bezeichnet werden.

Die Zwischenabbildungsoptik 4 ist so ausgelegt, dass sie den maximal möglichen Lichtleitwert der Kippspiegelmatrizen 3, 5 nicht begrenzt. Die numerische Apertur (Sinus des maximalen Öffnungswinkels der Strahlbündel) beträgt in diesem Fall 0,20 und der Winkel zwischen den Hauptstrahlen der Abbildungsbündel und der Modulator-Normalen beträgt 24°. Die Zwischenabbildungsoptik 4 ist auf einen nutzbaren Wellenlängenbereich von 400 bis 700 nm ausgelegt.

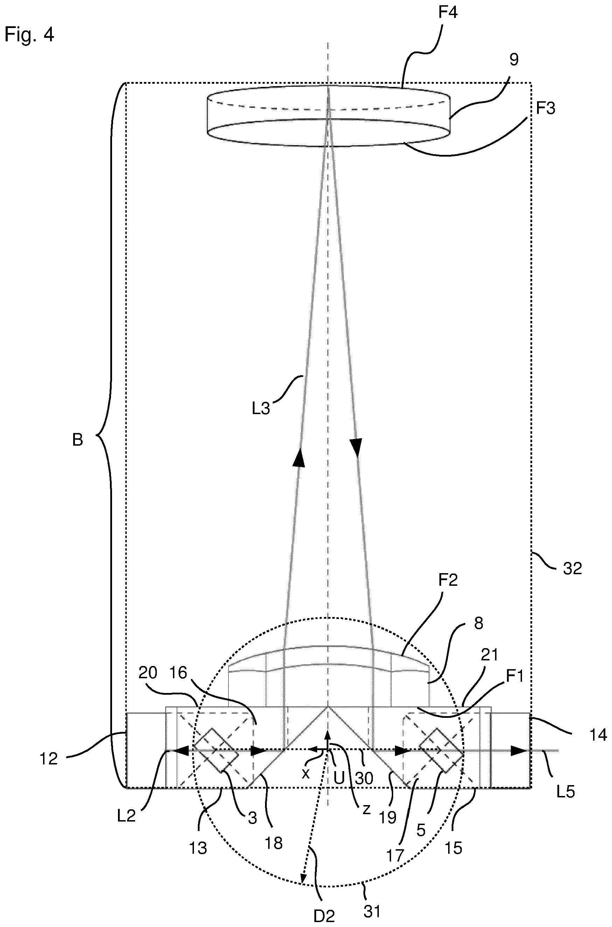

Die Plankonvexlinse 8 weist eine plane Fläche F1, die mit den ebenfalls planen Rückflächen 20, 21 der Prismen 13, 15, wie am besten in Fig. 4 ersichtlich ist, verkittet ist, und eine konvexe Fläche F2 auf. Die konvexe Fläche F2 ist eine Freiformfläche, die nicht sphärische und nicht rotationssymmetrisch ist sowie keine Spiegelsymmetrie aufweist und die gemäß der nachfolgenden Formel 1

$$z = \frac{(x^2 + y^2)/R}{1 + \sqrt{1 - (1+k) \cdot \frac{(x^2 + y^2)}{R^2}}} + \sum_{m,n=1}^{\infty} C_{m,n} \frac{1}{N_{Radius}^{n+m}} x^m y^n \tag{1}$$

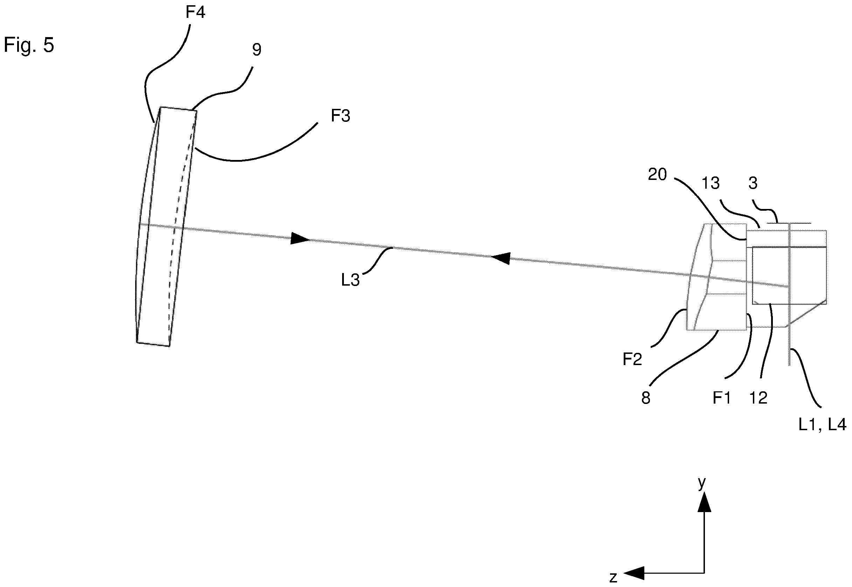

beschrieben werden kann. Hierbei bezeichnen x, y und z die drei kartesischen Koordinaten eines auf der Fläche F2 liegenden Punktes im lokalen flächenbezogenen Koordinatensystem. Das lokale flächenbezogene Koordinatensystem der Fläche F2 und somit die Fläche F2 ist um 22,4° im Uhrzeigersinn (in Fig. 5) um die x-Achse des lokalen flächenbezogenen Koordinatensystems der Rückflächen 20, 21 gedreht, das in den Figuren 3 - 5 eingezeichnet ist. R, k sowie die Polynomkoeffizienten mit den zugehörigen Entwicklungstermen sind in der nachfolgenden Tabelle 1 angegeben.

Eine ausreichend gute Korrektion aller Bildfehler wird in der Regel erreicht, wenn die Polynomentwicklung der Fläche Terme bis zur maximalen Ordnung $n+m \leq 10$ enthält. Im Ausführungsbeispiel sind Terme bis zur Ordnung $n+m \leq 10$ verwendet worden, wobei, anders als bei den bekannten Systemen auch in der x-Koordinate unsymmetrische Terme ungleich Null vorkommen.

Das beschriebene Ausführungsbeispiel des Projektionssystems weist eine maximale Optikbaugröße von 500 mm entlang der z-Achse auf, wobei alle optischen Elemente (insbesondere auch die Prismen) aus NBK7 der Firma SCHOTT AG, Hattenbergstrasse 10, 55122 Mainz, Deutschland, mit einer Abbe-Zahl von 64,2 und einer Brechzahl von 1,51680 bei der d-Linie (587 nm) sowie einer Abbe-Zahl von 64,0 und einer Brechzal von 1,51872 bei der e-Linie (546 nm) gebildet sind. NBK7 stellt ein bevorzugtes Material dar, da es kostengünstig ist und sich leicht bearbeiten lässt, sowie eine hohe Transmission und eine geringe thermische Ausdehnung aufweist.

Der Glasweg von der Oberseite 16 des zweiten Prismas 13 bis zur konvexen Seite der Plankonvexlinse 8 beträgt 141,5 mm. Die Koeffizienten $C_{m,n}$ gemäß Formel 1 sind in der nachfolgenden Tabelle 1 angegeben. Dabei sind zur Vereinfachung der Darstellung die Koeffizienten $C_{m,n}$ als XmYn angegeben, wobei jedoch n,m nur für Werte größer oder gleich 2 angegeben ist. Z.B. X in der Tabelle 1 steht somit für den Koeffizienten $C_{1,0}$ und z.B. XY2 steht für den $C_{1,2}$.

Tabelle 1

| X | -1,8091E-02 | Y | -2,5105E-02 | X2 | 6,9276E-01 |
|---|---|---|---|---|---|

(fortgesetzt)

| XY | -2,3456E-01 | Y2 | 6,1624E-01 | X3 | 9,4743E-02 |
|---|---|---|---|---|---|
| X2Y | 2,1066E-01 | XY2 | -1,6709E+00 | Y3 | -5,1034E-01 |
| X4 | 3,9419E-01 | X3Y | 1,1488E+00 | X2Y2 | 2,2398E+00 |
| XY3 | -5,9402E+00 | Y4 | -1,0470E+00 | X5 | -1,3452E-01 |
| X4Y | 4,1326E-02 | X3Y2 | 7,6991E+00 | X2Y3 | 7,1810E+00 |
| XY4 | -1,0972E+01 | Y5 | -6,3221E-01 | X6 | -5,6510E-01 |
| X5Y | -7,4337E-01 | X4Y2 | -2,0793E+00 | X3Y3 | 2,1386E+01 |
| X2Y4 | 1,8922E+01 | XY5 | -9,8700E+00 | Y6 | 1,8509E+00 |
| X7 | 8,6148E-02 | X6Y | -1,4166E+00 | X5Y2 | -8,8067E+00 |
| X4Y3 | 4,6394E-01 | X3Y4 | 1,7501E+01 | X2Y5 | 3,6844E+01 |
| XY6 | 1,2581E-01 | Y7 | 2,4286E+00 | X8 | 3,5254E-01 |
| X7Y | -2,0896E+00 | X6Y2 | 7,7845E-01 | X5Y3 | -3,5358E+01 |
| X4Y4 | 1,8385E+01 | X3Y5 | -1,8105E+01 | X2Y6 | 4,4238E+01 |
| XY7 | 1,1560E+01 | Y8 | -1,1428E+00 | X9 | -3,0223E-01 |
| X8Y | 1,0784E+00 | X7Y2 | -8,3917E+00 | X6Y3 | 6,1229E+00 |
| X5Y4 | -4,9734E+01 | X4Y5 | 3,0199E+01 | X3Y6 | -3,5415E+01 |
| X2Y7 | 2,6380E+01 | XY8 | 1,2759E+01 | Y9 | -3,1670E+00 |
| X10 | -4,4072E-02 | X9Y | -7,5280E-01 | X8Y2 | 1,1240E+00 |
| X7Y3 | -6,7680E+00 | X6Y4 | 4,8486E+00 | X5Y5 | -2,2578E+01 |
| X4Y6 | 1,4058E+01 | X3Y7 | -1,4585E+01 | X2Y8 | 5,5247E+00 |
| XY9 | 4,7407E+00 | Y10 | -1,3083E+00 | | 8,0000E+01 |
| k | 0 | | | | |
| $N_{Radius}$ | 8,0000E+01 | | | | |
| R | -170,52 | | | | |

Der Glasweg des Ein-Lichtes L3 von der Oberseite 16 des zweiten Prismas 13 bis zur Fläche F2 ist genau so lang wie der Glasweg des an der Spiegelfläche F4 reflektierten Ein-Lichtes L3 von der Fläche F2 bis zur Oberseite 17 des vierten Prismas 15.

Die zweite Linse 9 ist als außeraxialer Ausschnitt einer Linse mit einer ersten und zweiten sphärischen Grenzfläche ausgebildet, wobei die Fläche F3 ein außeraxialer Ausschnitt der ersten sphärischen Grenzfläche mit Krümmungsradius -507,78 mm und die Fläche F4 ein außeraxialer Ausschnitt der zweiten sphärischen Grenzfläche mit Krümmungsradius -499,23 mm ist. Die beiden sphärischen Grenzflächen sind in axialer Richtung entlang der z-Achse des Koordinatensystems um 15,0 mm beabstandet. Die axiale Richtung ist hierbei die z-Richtung des lokalen Koordinatensystems der Fläche F2 vor ihrer Drehung um 22,4°. Der axiale Abstand der lokalen Koordinatenursprünge der Flächen F2 und F3 beträgt 340,0 mm. Die beiden Kippspiegelmatrizen 3, 5 weisen jeweils ein Deckglas (NBK7) mit einer Dicke von 3,0 mm auf, das von den Mittelpunkten der Kippspiegel um 0,48 mm beabstandet und von der entsprechenden Oberseite 16, 17 des zweiten bzw. vierten Prismas 13, 15 um 0,1 mm beabstandet ist.

Die nachfolgende Tabelle 2 zeigt die Verzeichnung (Abweichung der Hauptstrahldurchstoßpunkte eines von der ersten Kippspiegelmatrix 3 ausgehenden Strahlbündels vom Mittelpunkt des jeweils zugeordneten Pixels der zweiten Kippspiegelmatrix 5 in deren Ebene) für ein Raster von 5 x 5 Feldpunkten, die regelmäßig über der Fläche der ersten Kippspiegelmatrix 3 verteilt sind. Die x-Koordinaten und y-Koordinaten sind bezogen auf das in Figur 4 eingezeichnete rechtshändige kartesische Koordinatensystem mit dem Koordinatenursprung U angegeben.

**EP 3 978 983 B1**

Tabelle 2

| x-Koordinate des Feldpunktes in mm | y-Koordinate des Feldpunktes in mm | x-Verzeichnung in $\mu$m | y-Verzeichnung in $\mu$m | Feldpunkt Nr. |
|---|---|---|---|---|
| 28,838 | 16,758 | -2,56361 | -0,37899 | 1 |
| 34,318 | 11,278 | -1,89184 | 2,61848 | 2 |
| 39,798 | 5,798 | 1,47416 | 1,4299 | 3 |
| 45,278 | 0,318 | 3,76699 | -0,545741 | 4 |
| 50,758 | -5,162 | 0,700509 | -5,01965 | 5 |
| 25,939 | 13,859 | -2,58217 | -1,09282 | 6 |
| 31,419 | 8,379 | -1,76816 | 2,17349 | 7 |
| 36,899 | 2,899 | 0,742337 | 2,28815 | 8 |
| 42,379 | -2,581 | 1,64596 | 1,82817 | 9 |
| 47,859 | -8,061 | -2,09453 | -2,03628 | 10 |
| 23,04 | 10,96 | -1,77547 | -1,75217 | 11 |
| 28,52 | 5,48 | -0,694947 | 1,37354 | 12 |
| 34,00 | 0,00 | 1,17218 | 2,25062 | 13 |
| 39,48 | -5,48 | 1,05768 | 2,73327 | 14 |
| 44,96 | -10,96 | -2,92518 | -0,490348 | 15 |
| 20,141 | 8,061 | -0,659351 | -2,59233 | 16 |
| 25,621 | 2,581 | 0,718347 | -0,00782425 | 17 |
| 31,101 | -2,899 | 2,10682 | 1,16095 | 18 |
| 36,581 | -8,379 | 1,27586 | 2,27763 | 19 |
| 42,061 | -13,859 | -2,67946 | 0,091155 | 20 |
| 17,242 | 5,162 | 0,434282 | -3,77185 | 21 |
| 22,722 | -0,318 | 2,06756 | -2,09796 | 22 |
| 28,202 | -5,798 | 3,05967 | -1,02122 | 23 |
| 33,682 | -11,278 | 1,67029 | 0,613244 | 24 |
| 39,162 | -16,758 | -2,22975 | -0,0357044 | 25 |

Die Verzeichnung beträgt an jedem Punkt der der zweiten Kippspiegelmatrix 5 weniger als ca. 5 $\mu$m und damit weniger als eine Pixelbreite der zweiten Kippspiegelmatrix 5, die bei einer 4K-Auflösung mit 3840 $\times$ 2160 Kippspiegeln 5,4 $\mu$m beträgt. Die abzubildende Fläche der Kippspiegelmatrizen beträgt 31 mm $\times$ 16,4 mm. Bei den Kippspiegelmatrizen kann jeder Kippspiegel eine quadratische Form aufweisen, wobei die Kantenlänge ca. 5 $\mu$m betragen kann. Unter Pixelbreite wird hier insbesondere die Kantenlänge eines Kippspiegels plus die notwendige Lücke zum benachbarten Kippspiegel verstanden.

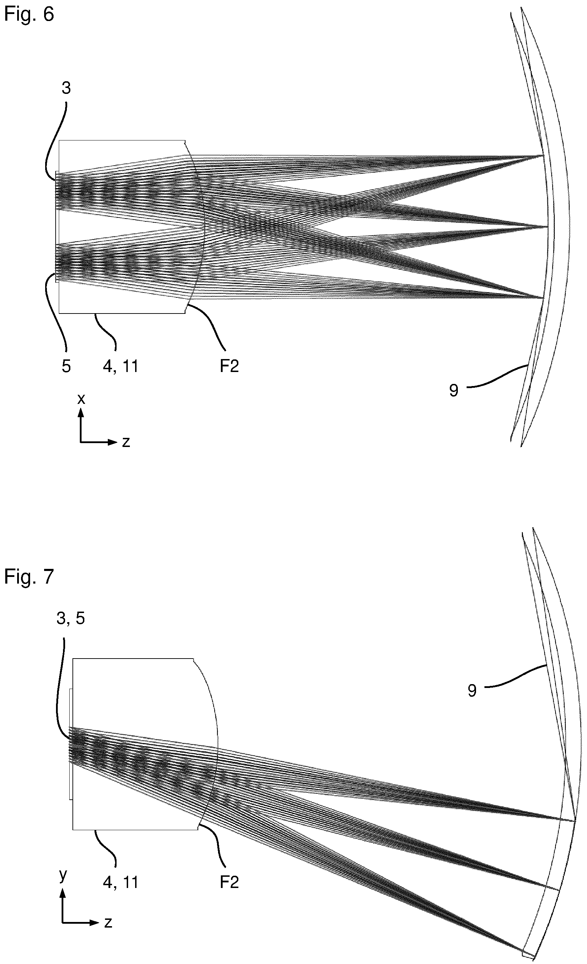

Figur 6 zeigt die Strahlverläufe des entfalteten Strahlenganges im xz-Schnitt (Projektion der Strahlbündel auf die xz-Ebene) und Figur 7 zeigt die Strahlverläufe des entfalteten Strahlenganges und im yz-Schnitt (Projektion der Strahlbündel auf die yz-Ebene). Dabei ist die Umlenkoptik 11 und die Plankonvexlinse schematisch als Block dargestellt.

Durch die Projektion der Strahlbündel auf die xz-Ebene in Fig. 6 erscheint es in der Fig. 6 zunächst so, als ob die Reflexion nicht an der Rückseite der Spiegelmeniskuslinse 9 erfolgen würde. Sie erfolgt natürlich an der Rückseite der Spiegelmeniskuslinse 9, aber an einer gegenüber der Zeichenebene (xz-Schnittebene des globalen Koordinatensystems) in y-Richtung versetzten Stelle (entsprechend der Zahlenangabe zum Versatz der Aperturblende), deren Projektion in die globale xz-Ebene gegenüber der Schnittlinie der Fläche mit der xz-Ebene nach vorne versetzt ist.

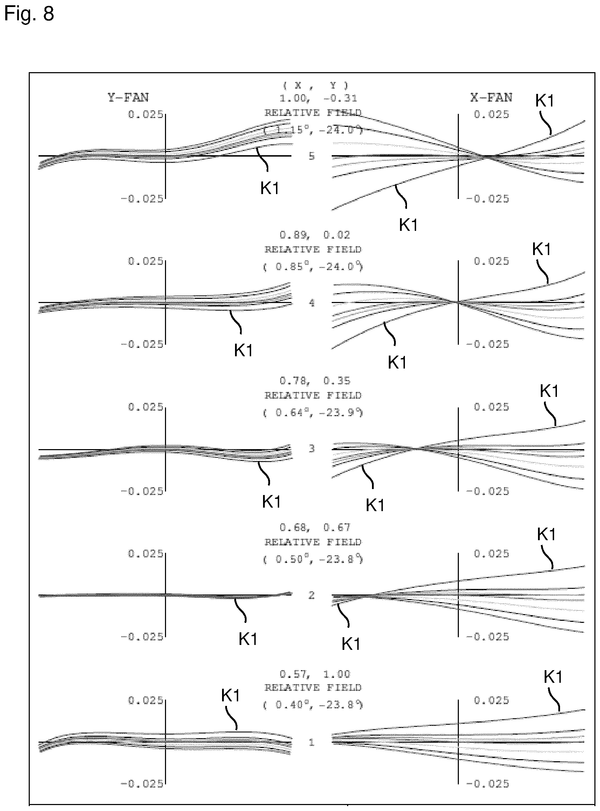

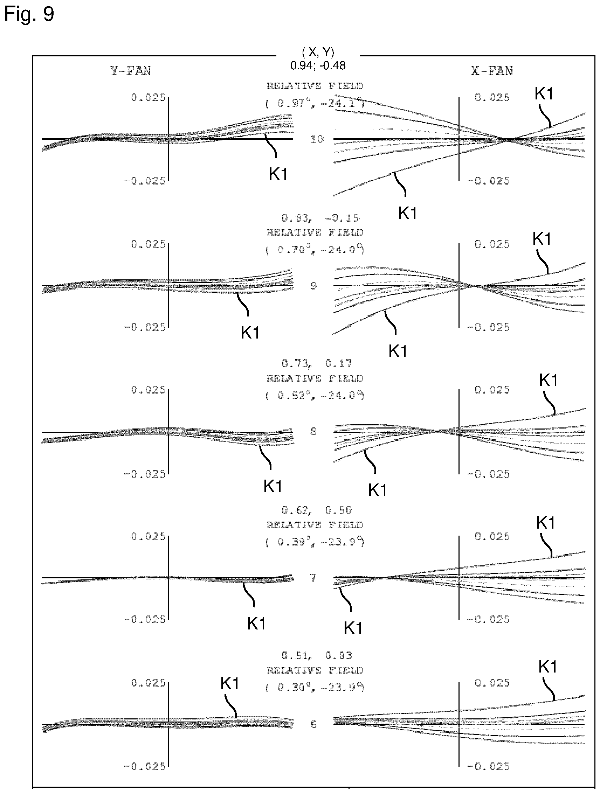

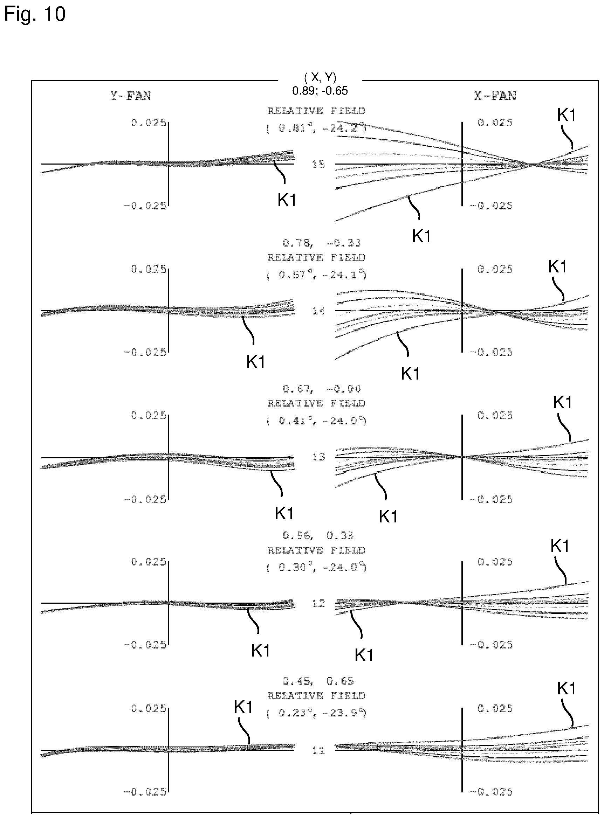

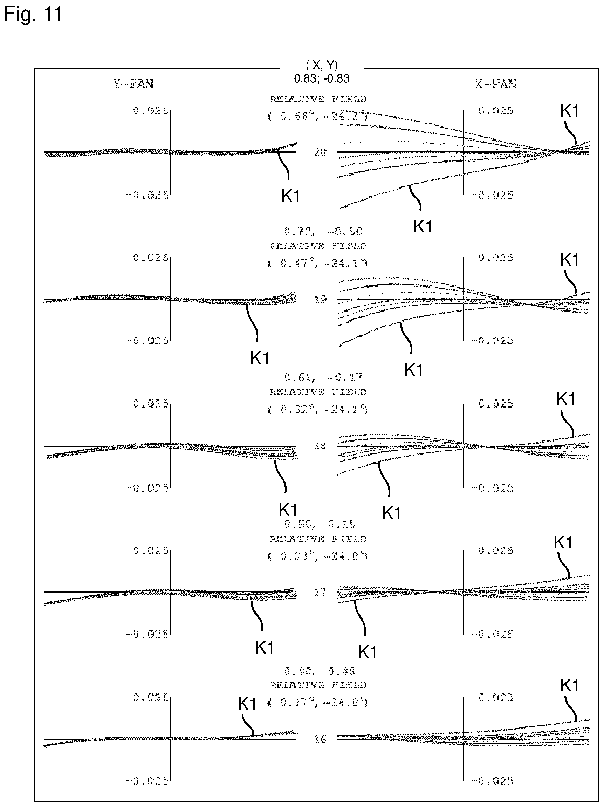

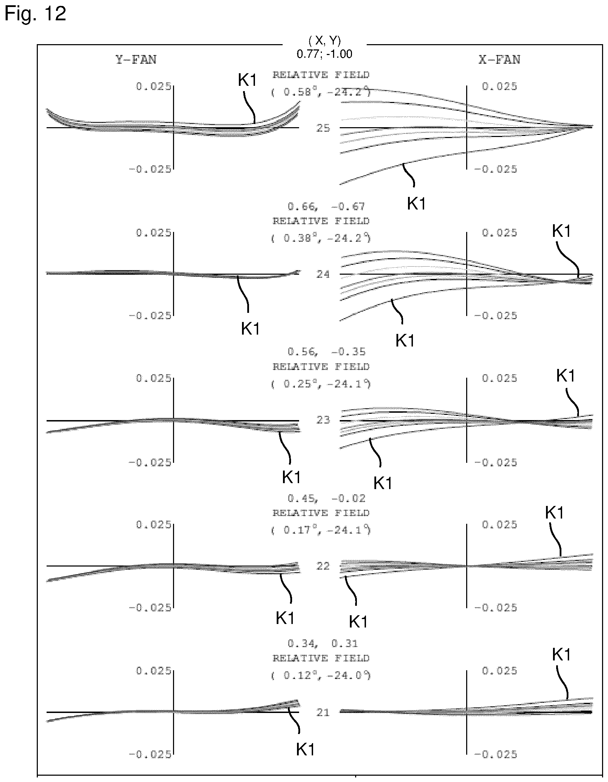

Die nachfolgenden Figuren 8 bis 12 zeigen die Abbildungsgüte anhand der Queraberrationskurven in der yz-Ebene (über der Pupillenkoordinate in der yz-Ebene; jeweils linke Spalte und als "Y-FAN" bezeichnet) und in der xz-Ebene (über die Pupillenkoordinate in der xz-Ebene; jeweils rechte Spalte und als "X-FAN" bezeichnet) für die Feldbündel, die zu den selben 5x5 äquidistant über dem Bildfeld verteilten Feldbündeln aus Tabelle 2 gehören. Dabei sind zwischen den Queraberrationskurven die Feldpunktnummern gemäß Tabelle 2 angegeben. So zeigt Fig. 8 beispielsweise von oben nach unten die Queraberrationskurven für die Feldpunkte 5, 4, 3, 2 und 1. Die Bildfehler sind in Millimeter jeweils für die Wellenlängen 656, 587, 546, 486, 435 und 404 nm dargestellt, wobei die verschiedenen Kurven nicht einzeln bezeichnet sind. Ferner ist der Verlauf als Kurve K1 für die Wellenlänge 1050 nm aus dem nahen Infrarot gezeigt. Wesentlich ist es, dass für alle genannten Wellenlängen sehr geringe Queraberrationen vorliegen. Die Darstellungen in Figuren 8 bis 12 sind dem Fachmann bekannte Darstellungstypen der Optikdesign-Software Code V.

Eine weitere Ausführungsform des erfindungsgemäßen Projektionssystems wird nachfolgend beschrieben, bei der durch Einsatz einer höherbrechenden Glasart in den Prismen eine besonders kompakte Baugröße von nur 450 mm bei gleichzeitig guter Korrektion von Verzeichnung und sonstigen Abbildungsfehlern ermöglicht wird. In die Tabelle 3 sind die Polynomkoeffizienten der Formel 1 in gleicher Weise wie in Tabelle 1 angegeben.

Tabelle 3

| X | -6,3475E-03 | Y | -3,1112E-02 | X2 | 3,8939E+00 |
|---|---|---|---|---|---|
| XY | -7,3389E-02 | Y2 | 3,7231E+00 | X3 | 4,1410E-02 |
| X2Y | 2,3055E-01 | XY2 | -5,2894E-01 | Y3 | -6,2492E-01 |
| X4 | 7,2618E-01 | X3Y | 4,1281E-01 | X2Y2 | 3,1188E+00 |
| XY3 | -2,0723E+00 | Y4 | -3,6458E-01 | X5 | -7,5666E-02 |
| X4Y | -1,9722E-01 | X3Y2 | 2,3893E+00 | X2Y3 | 5,9415E+00 |
| XY4 | -4,5920E+00 | Y5 | -2,0135E-02 | X6 | -2,1464E-01 |
| X5Y | -5,7871E-01 | X4Y2 | -3,5491E+00 | X3Y3 | 6,2132E+00 |
| X2Y4 | 9,5812E+00 | XY5 | -6,1265E+00 | Y6 | 1,7010E+00 |
| X7 | 5,6027E-03 | X6Y | -1,2604E+00 | X5Y2 | -4,1619E+00 |
| X4Y3 | -1,1926E+01 | X3Y4 | 4,2063E+00 | X2Y5 | 7,3964E+00 |
| XY6 | -4,6621E+00 | Y7 | 9,2748E-01 | X8 | 1,1641E-01 |
| X7Y | -7,7459E-01 | X6Y2 | -2,0857E+00 | X5Y3 | -1,4208E+01 |
| X4Y4 | -1,5233E+01 | X3Y5 | -7,2569E+00 | X2Y6 | 2,1583E+00 |
| XY7 | -7,8304E-01 | Y8 | -1,7998E+00 | X9 | -9,0852E-02 |
| X8Y | 2,6261E-01 | X7Y2 | -3,0109E+00 | X6Y3 | -1,1536E+00 |
| X5Y4 | -1,9037E+01 | X4Y5 | -7,6712E+00 | X3Y6 | -1,1818E+01 |
| X2Y7 | -1,1598E+00 | XY8 | 1,6567E+00 | Y9 | -2,4289E+00 |
| X10 | -7,8345E-03 | X9Y | -2,4669E-01 | X8Y2 | 2,3460E-01 |
| X7Y3 | -2,4565E+00 | X6Y4 | 2,6428E-01 | X5Y5 | -8,4363E+00 |
| X4Y6 | -8,6501E-01 | X3Y7 | -4,5659E+00 | X2Y8 | -8,8851E-01 |
| XY9 | 9,3225E-01 | Y10 | -8,2504E-01 | | |
| k | 0 | | | | |
| N$_{Radius}$ | 8,0000E+01 | | | | |
| R | -167,84 | | | | |

Der Glasweg von der Oberseite 16 des zweiten Prismas 13 bis zur konvexen Seite der Plankonvexlinse 8 beträgt 164,4 mm. Der Glasweg des Ein-Lichtes L3 von der Oberseite 16 des zweiten Prismas 13 bis zur Fläche F2 ist genau so lang wie der Glasweg des an der Spiegelfläche F4 reflektierten Ein-Lichtes L3 von der Fläche F2 bis zur Oberseite 17 des vierten Prismas 15.

Die zweite Linse 9 ist als außeraxialer Ausschnitt einer Linse mit einer ersten und zweiten sphärischen Grenzfläche ausgebildet, wobei die Fläche F3 ein Ausschnitt der ersten sphärischen Grenzfläche mit Krümmungsradius -509,82 mm und die Fläche F4 ein Ausschnitt der zweiten sphärischen Grenzfläche mit Krümmungsradius -455,99 mm ist. Die beiden sphärischen Grenzflächen sind in axialer Richtung um 16,5 mm beabstandet. Die axiale Richtung ist hierbei die z-Richtung des lokalen Koordinatensystems der Fläche F2 vor ihrer Drehung um 22,4°. Der axiale Abstand der lokalen Koordinatenursprünge der Flächen F2 und F3 beträgt 265,22 mm. Die beiden Kippspiegelmatrizen 3, 5 weisen jeweils ein Deckglas (NBK7) mit einer Dicke von 3,0 mm auf, das von den Mittelpunkten der Kippspiegel um 0,48 mm beabstandet und von der entsprechenden Oberseite 16, 17 des zweiten bzw. vierten Prismas 13, 15 um 0,1 mm beabstandet ist.

Für die Prismen 12 und 14 wird wiederum NBK7 der Firma SCHOTT AG, für die Prismen 13 und 15 wird SLAH66 der Firma OHARA GmbH, Im Langgewann 4, 65719 Hofheim am Taunus, Deutschland mit einer Abbe-Zahl von 49,6 und einer Brechzahl von 1,77250 bei der d-Linie (587 nm) und einer Abbe-Zahl von 49,4 und einer Brechzal von 1,77621 bei der e-Linie (546 nm) verwendet. Für die beiden Linsen 8 und 9 wird NFK5 der Firma SCHOTT AG mit einer Abbe-Zahl von von 70,4 und einer Brechzahl von 1,48749 bei der d-Linie (587 nm) und einer Abbe-Zahl von 70,2 und einer Brechzal von 1,48914 bei der e-Linie (546 nm) verwendet.

Die nachfolgende Tabelle 4 zeigt in gleicher Weise wir Tabelle 2 die Verzeichnung (Abweichung der Hauptstrahldurchstoßpunkte eines von der ersten Kippspiegelmatrix 3 ausgehenden Strahlbündels vom Mittelpunkt des jeweils zugeordneten Pixels der zweiten Kippspiegelmatrix 5 in deren Ebene) für ein Raster von 5 × 5 Feldpunkten, die regelmäßig über der Fläche der ersten Kippspiegelmatrix 3 verteilt sind.

Tabelle 4

| x-Koordinate des Feldpunktes in mm | y-Koordinate des Feldpunktes in mm | x-Verzeichnung in $\mu$m | y-Verzeichnung in $\mu$m | Feldpunkt Nr. |
|---|---|---|---|---|
| 28,838 | 16,758 | -1,9302 | -0,628528 | 1 |
| 34,318 | 11,278 | -1,44137 | 1,88297 | 2 |
| 39,798 | 5,798 | 1,08306 | 1,16644 | 3 |
| 45,278 | 0,318 | 2,68963 | -0,371421 | 4 |
| 50,758 | -5,162 | 0,578919 | -4,03278 | 5 |
| 25,939 | 13,859 | -1,81299 | -0,863106 | 6 |
| 31,419 | 8,379 | -1,26539 | 1,77738 | 7 |
| 36,899 | 2,899 | 0,606691 | 1,88743 | 8 |
| 42,379 | -2,581 | 1,22142 | 1,37751 | 9 |
| 47,859 | -8,061 | -1,46101 | -1,66907 | 10 |
| 23,04 | 10,96 | -1,2331 | -1,29975 | 11 |
| 28,52 | 5,48 | -0,494738 | 1,19751 | 12 |
| 34,00 | 0,00 | 0,928817 | 1,83591 | 13 |
| 39,48 | -5,48 | 0,842039 | 2,04334 | 14 |
| 44,96 | -10,96 | -2,11586 | -0,361775 | 15 |
| 20,141 | 8,061 | -0,487519 | -1,99245 | 16 |
| 25,621 | 2,581 | 0,48282 | 0,114233 | 17 |
| 31,101 | -2,899 | 1,597 | 0,993166 | 18 |
| 36,581 | -8,379 | 1,01871 | 1,70299 | 19 |
| 42,061 | -13,859 | -2,04069 | 0,122957 | 20 |
| 17,242 | 5,162 | 0,232847 | -2,9648 | 21 |
| 22,722 | -0,318 | 1,40446 | -1,48589 | 22 |
| 28,202 | -5,798 | 2,26108 | -0,658525 | 23 |
| 33,682 | -11,278 | 1,27073 | 0,387934 | 24 |
| 39,162 | -16,758 | -1,89547 | -0,152872 | 25 |

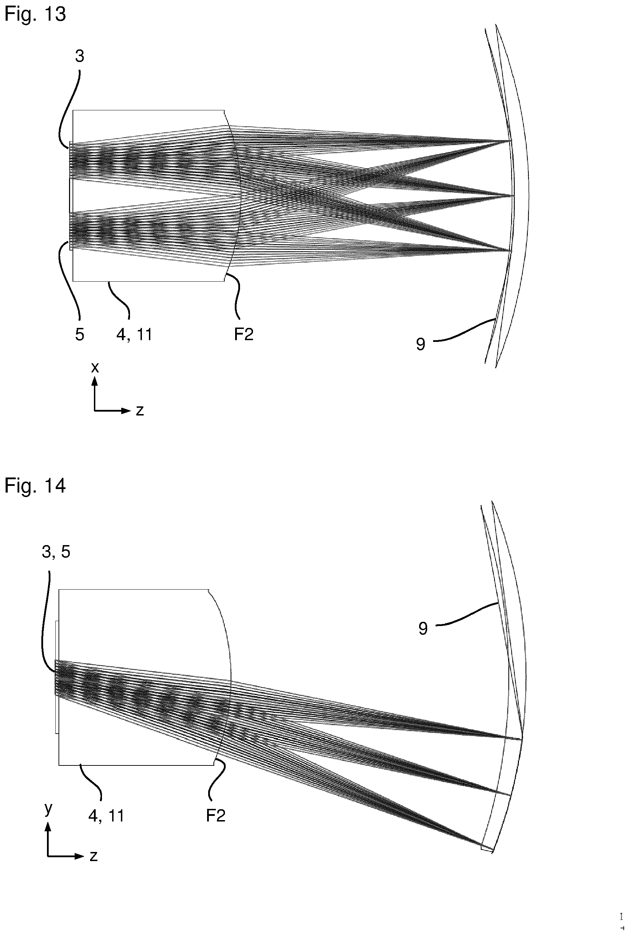

Figur 13 zeigt die Strahlverläufe des entfalteten Strahlenganges im xz-Schnitt und Figur 14 zeigt die Strahlverläufe des entfalteten Strahlenganges und im yz-Schnitt.

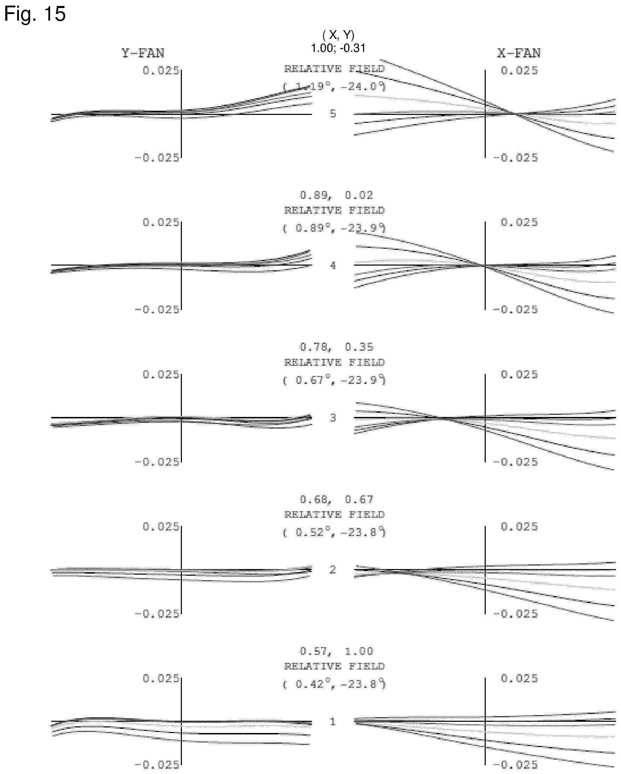

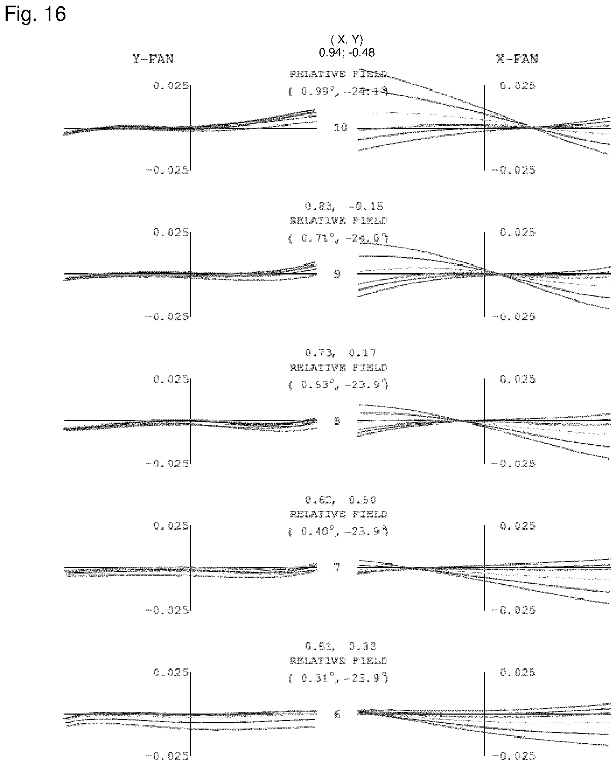

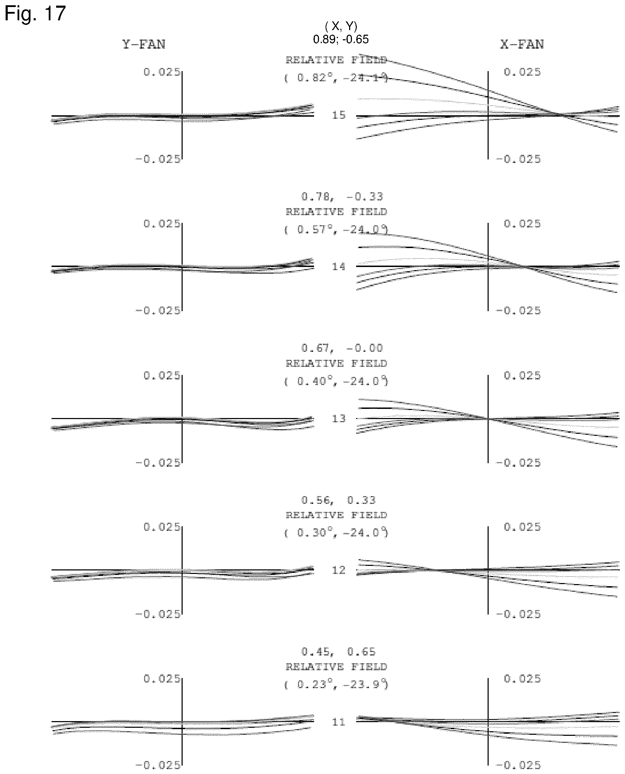

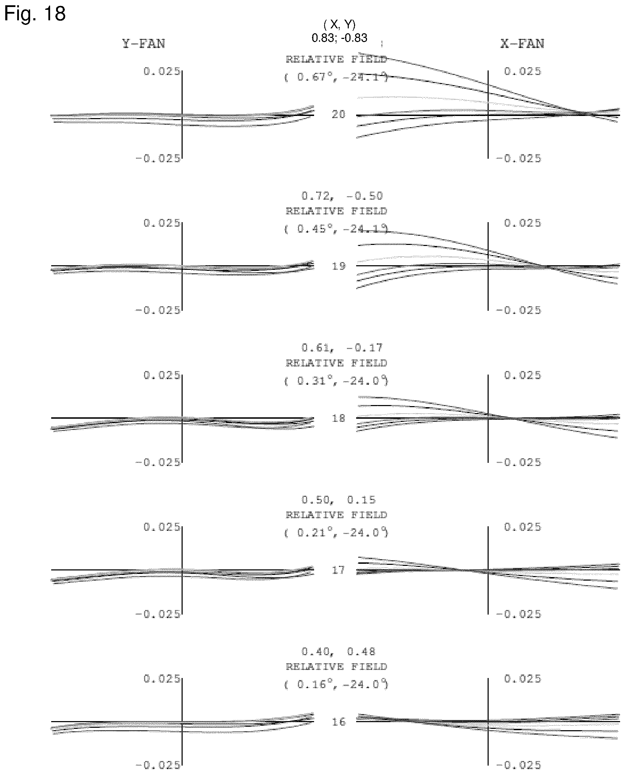

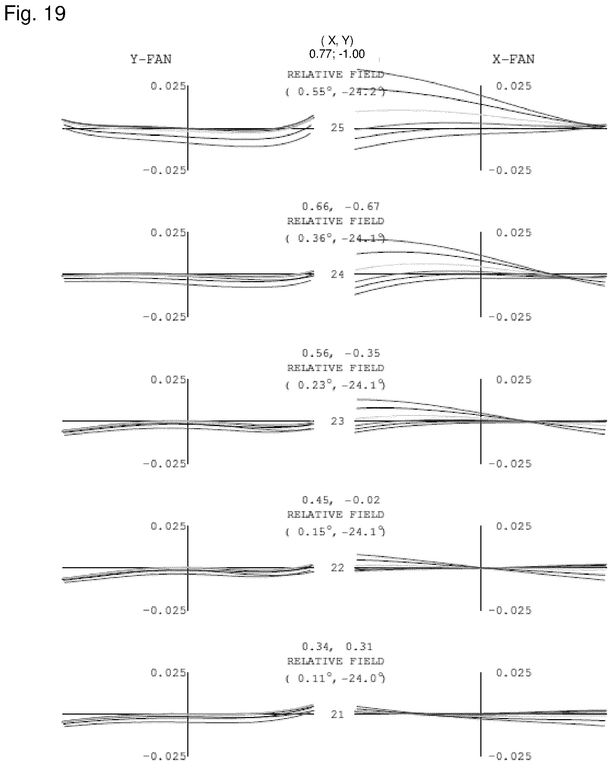

Die nachfolgenden Figuren 15 bis 19 zeigen in gleicher Weise wie die Figuren 8 bis 12 die Abbildungsgüte anhand der Queraberrationskurven im yz- und xz-Schnitt für die Feldbündel, die zu den selben 5x5 äquidistant über dem Bildfeld verteilten Feldbündeln aus Tabelle 4 gehören, wobei jedoch Kurven für die Wellenlänge 1050 nm hier nicht enthalten sind.

Eine erfindungsgemäße, nicht-meridionalsymmetrische Zwischenabbildungsoptik bildet eine erste Kippspiegelmatrix 3 auf eine zweite Kippspiegelmatrix 5 mit dem Abbildungsmaßstab 1:1 ab. Die Mittelpunkte der Kippspiegel der ersten Kippspiegelmatrix 3 bilden die Objekt- bzw. Bezugsebene E, die bei Betrachtung der entfalteten Umlenkoptik 11 mit der xy-Ebene des Koordinatensystems zusammenfällt, wie in Figuren 6, 7, 13 und 14 gezeigt ist. Die einzelnen Kippspiegel der ersten Kippspiegelmatrix 3 können also mit den x- und y- Koordinaten ihrer jeweiligen Mittelpunkte eindeutig bezeichnet werden (vgl. obige Tabellen 2 und 4).

Die von den Kippspiegelmittelpunkten der zweiten Kippspiegelmatrix 5 gebildete Ebene kann im allgemeinsten Fall um einen (kleinen) Winkel (z.B. bis zu ca. $\pm 1°$) gegenüber der Bezugsebene E verkippt sein. Eine solche Verkippung kann insbesondere in Verbindung mit einer nicht-meridionalsymmetrischen Zwischenabbildungsoptik 4 ein weiterer Freiheitsgrad sein, der zur Kalibrierung der Verzeichnung genutzt werden kann. Die beschriebenen Ausführungsbeispiele sind jedoch zur Erleichterung der Montage und Justage so ausgelegt, dass auch die zweite Kippspiegelmatrix 5 in der Bezugsebene E liegt.

Als "primäre Achse" sei die z-Achse des rechtshändigen kartesischen Koordinatensystems bezeichnet, die man auch als Mittelsenkrechte auf die Bezugsebene E in dem Punkt U (U = Koordinatenursprung), der die Verbindungsgerade 31 (gestrichelt in Figur 4 eingezeichnet) zwischen dem Mittelpunkt der Modulatorfläche der ersten Kippspiegelmatrix 3 und dem Mittelpunkt ihres durch die Zwischenabbildungsoptik 4 abgebildeten Bildes in gleichlange Strecken teilt, verstehen kann. Auch hier wird von einer entfalteten Umlenkoptik 11, wie in Figuren 6, 7, 13 und 14 gezeigt ist, ausgegangen. Der Koordinatenursprung U ist zur Vereinfachung der Darstellungen nur in Figur 4 eingezeichnet. In allen anderen Figuren ist lediglich die entsprechende x-, y- und/oder z-Richtung dargestellt.

Als Maß dafür, wann die Zwischenabbildungsoptik 4 für gegebene Anforderungen noch als kompakt bezeichnet werden kann, definieren wir die "Feldwinkelbelastung" FWB als das Verhältnis aus "halbem Felddurchmesser" D2 zu "Baulänge" B. Die Verzeichnung steigt in hoher Potenz (mindestens fünfte Potenz) mit dem Parameter FWB an.

Als "halber Felddurchmesser" D2 der Zwischenabbildungsoptik 4 sei der halbe Durchmesser des kleinsten Kreises 31 (gestrichelt in Figur 4 eingezeichnet) um den Koordinatenursprung U in der Bezugsebene E bezeichnet, der alle Objektpunkte der ersten Kippspiegelmatrix 3 (bzw. die komplette erste Modulatorfläche) und das gesamte durch die Zwischenabbildungsoptik 4 abgebildete Bild der ersten Modulatorfläche (und somit, bis auf die Auswirkung der Verzeichnung, auch der zweiten Kippspiegelmatrix 5) einschließt.

Als "Baulänge" B der Zwischenabbildungsoptik 4 sei die Ausdehnung (entlang der z-Richtung, also der Richtung der primären Achse) des kleinsten Quaders 32 (gestrichelt in Figur 4 eingezeichnet) bezeichnet, der die optisch genutzten Bereiche sämtlicher optischer Elemente zwischen den Kippspiegelmatrizen 3, 5 sowie einschließlich der Kippspiegelmatrizen 3, 5 vollständig einschließt.

Die Erfahrung zeigt, dass die Feldwinkelbelastung ein sehr kritischer Parameter für die residuale Verzeichnung der Zwischenabbildungsoptik 4 ist. Für eine Feldwinkelbelastung FWB von kleiner als 0,08 kann eine im wesentlichen pixeltreue, und mit einer Feldwinkelbelastung FWB von kleiner als 0,06 eine streng pixeltreue Abbildung auch mit einer meridionalsymmetrischen Zwischenabbildungsoptik erreicht werden. Hierbei betrachten wir eine Abbildung als im Wesentlichen pixeltreu, wenn die Verzeichnung in jeder Richtung (x/y) kleiner als die Kantenlänge eines Kippspiegels der Kippspiegelmatrix ist, und als streng pixeltreu, wenn sie kleiner als die halbe (insbesondere sogar 1/3) Kantenlänge eines Kippspiegels der Kippspiegelmatrix ist.

Die erfindungsgemäße nicht-meridionalsymmetrische Zwischenabbildungsoptik 4 ist vorteilhaft, wenn eine Feldwinkelbelastung FWB $\geq$ 0,06, und besonders vorteilhaft, wenn FWB $\geq$ 0,08 vorliegt. Sie reduziert dann die jeweils erreichbare residuale Verzeichnung. Darüber hinaus hilft sie geringfügig auch bei der feineren Korrektur der residualen Wellenfrontfehler, also der Schärfe der Abbildung.

Für Feldwinkelbelastungen FWB $\geq$ 0,1 ist eine im Wesentlichen pixeltreue Abbildung nur mit der erfindungsgemäßen nicht-meridionalsymmetrischen Freiformoptik zu erzielen.

Beim ersten Ausführungsbeispiel 1 beträgt der halbe Felddurchmesser 51,02 mm und die Baulänge 493,9 mm. Somit ergibt sich eine Feldwinkelbelastung von FWB = 0,1033.

Beim zweiten Ausführungsbeispiel 2 beträgt der halbe Felddurchmesser ebenfalls 51,02 mm und die Baulänge 445,6 mm. Somit ergibt sich eine Feldwinkelbelastung von FWB = 0,1145.

Als charakteristisches Maß zur Charakterisierung der Abweichung der Freiformflächen F2 von der Meridionalsymmetrie kann die maximale Abweichung des Oberflächenprofils der Freiformfläche F2 entlang der z-Koordinate ("Pfeilhöhe") über dem gesamten von Lichtbündeln optisch genutzten Bereich für jeweils gespiegelte Werte der x-Koordinate betrachtet werden. Als "Abweichung von der Meridionalsymmetrie" AvMS an einem Punkt mit den Koordinaten x, y im lokalen Flächenkoordinatensystem der Freiformfläche F2 soll der Betrag der Differenz der Pfeilhöhen $AvMS(x,y) := |z(+x,y) - z(-x,y)|$ verstanden werden. Als "maximale Abweichung von der Meridionalsymmetrie" MaxAvMS wird entsprechend der betragsmäßig größte auftretende Wert von AvMS(x,y) für alle Punkte x,y, die zum optisch genutzten Bereich der Freiformfläche gehören, definiert.

Ein typischer Wertebereich der Abweichung der Freiformfläche von der Meridionalsymmetrie beträgt $1\mu m \leq MaxAvMS \leq 100\mu m$, wobei bevorzugt der Wertebereich $3\mu m \leq MaxAvMS \leq 20\ \mu m$ beträgt.

Für das erste Ausführungsbeispiel ergibt sich eine maximale Abweichung von der Meridionalsymmetrie von ca. $MaxAvMS = 8.5\ \mu m$ und für das zweite Ausführungsbeispiel ergibt sich eine maximale Abweichung von der Meridionalsymmetrie von ca. $MaxAvMS = 4\ \mu m$.

Obwohl das sagittale Schnittbild gemäß Figuren 6 und 13 leicht dazu verführt, eine Symmetrie des Problems zu vermuten, liegt diese erfindungsgemäß gerade nicht vor. Man ist intuitiv verführt, zu erwarten, dass bei einer meridionalsymmetrischen Zwischenabbildungsoptik (beispielsweise einer sogar rotationssymmetrischen Zwischenabbildungsoptik) ein Punkt mit der x-Koordinate von z.B. +10 mm exakt auf den gespiegelten Punkt mit der Koordinate -10 mm abgebildet wird. Das ist aber wegen der Verzeichnung nicht (exakt) der Fall, insbesondere für Objektpunkte, die in Bezug auf das gewählte Koordinatensystem auch entlang der y-Achse eine von Null verschiedene Koordinate aufweisen. Vielmehr hilft überraschenderweise gerade der Bruch der Meridionalsymmetrie, sich dem Ideal einer symmetrischen Lage der Objekt- und Bildpunkte anzunähern, also die residuale Verzeichnung zu minimieren. Diese nimmt tendenziell sehr stark zu, wenn die Mittelpunkte der Kippspiegelmatrizen sich von der primären Achse der Zwischenabbildungsoptik 4 weiter entfernen. Eine nicht-meridionalsymmetrische Auslegung der Zwischenabbildungsoptik ist essentiell dafür, diese Verzeichnung wieder gut korrigieren zu können und dennoch eine kompakte Bauform beizubehalten.

Es ist somit bevorzugt, dass die Zwischenabbildungsoptik 4 aus einem außeraxialen Ausschnitt einer rückseitig verspiegelten Glaslinse 9 mit sphärischen Grenzflächen F3, F4 sowie aus einer Plankonvexlinse 8, deren konvexe Fläche F2 zur wirksamen Korrektur der Verzeichnung gewisser Wellenfrontaberrationen als nicht-meriodionalsymmetrische Freiformfläche F2 ausgebildet ist, besteht.

Die Ausdehnungen der Flächen der Linsen 8 und 9 sowie der Prismen 12 - 15 bestimmen sich aus den angegebenen Abmessungen des Bildfeldes, der numerischen Apertur und den Konstruktionsdaten der optischen Elemente so, dass keinerlei künstliche Vignettierung in der Zwischenabbildungsoptik 4 auftritt. Die wirksame Aperturblende wird durch die Ausdehnung der verspiegelten Fläche F4 gebildet.

Die Aperturblende der Zwischenabbildungsoptik 4 wird durch den optisch genutzten Bereich der Spiegelfläche F4 der zweiten Linse 9 gebildet.

Ergänzend zu den bisherigen Erläuterungen, warum die Spiegelsymmetrie bei der Anordnung der Kippspiegelmatrizen bei den gezeigten Ausführungsbeispielen gebrochen ist, sei folgendes ausgeführt.

Wesentlich ist, dass die Verteilung der Kippspiegel der Kippspiegelmatrizen 3, 5 bzgl. der yz-Ebene in den Darstellungen gemäß Figuren 6, 7 sowie 13, 14 nicht spiegelsymmetrisch ist. Sie sind vielmehr punktsymmetrisch bzgl. des Koordinatenursprungs. Aber auch eine fiktive Spiegelsymmetrie bzgl. der xz-Ebene ist dadurch gebrochen, dass die Aperturblende ja in Richtung der y-Achse dezentriert ist. Somit sind beide fiktiven Spiegelsymmetrien, die bezüglich dieser Ebenen vermutet werden könnten, nicht mehr vorhanden. Die erfindungsgemäße Abweichung von der Meridionalsymmetrie bei der Freiformfläche F2 führt daher zu den beschriebenen optischen Vorteilen der Zwischenabbildungsoptik 4.

Bei der bisherigen Beschreibung wird davon ausgegangen, dass der Beleuchtungsmodulator 3 mit weißem Licht beaufschlagt wird. Jedoch ist es auch möglich, dass die Lichtquelle 2 farbiges Licht abgibt. Insbesondere kann sie zeitsequentiell verschiedenfarbiges Licht abgeben, wie z. B. rotes, grünes und blaues Licht. Dann kann in der dem Fachmann bekannten Weise ein mehrfarbiges Bild durch die zeitsequentielle Darstellung von roten, grünen und blauen Teilfarbbildern erzeugt werden. Es muss lediglich der Farbwechsel so schnell durchgeführt werden, dass ein Betrachter die zeitlich nacheinander projizierten Teilfarbbilder nicht mehr trennen kann, so dass der Betrachter nur die Überlagerung und somit das mehrfarbige Bild wahrnehmen kann.

Die zeitsequentielle Erzeugung des unterschiedlich farbigen Beleuchtungslichtes kann in üblicher Art und Weise durchgeführt werden, beispielsweise mittels einem Farbrad (nicht eingezeichnet) zwischen der Lichtquelle 2 und dem Beleuchtungsmodulator 3.

Natürlich ist es auch möglich, statt nur eines Beleuchtungsmodulators drei Beleuchtungsmodulatoren 3 vorzusehen, die gleichzeitig mit roten, grünen oder blauen Licht beaufschlagt werden. Das rote, grüne und blaue Ein-Licht der drei Modulatoren wird dann überlagert und das überlagerte Ein-Licht wird mittels der Zwischenabbildungsoptik 4 farbselektiv auf drei Bildmodulatoren 5 abgebildet. Die Bildmodulatoren modulieren das jeweilige Farbteilbild, das wiederum überlagert und dann mittels der Zwischenabbildungsoptik 6 auf die Projektionsfläche 10 projiziert wird.

Die Überlagerung und Farbtrennung kann mittels dichroitischen Schichten durchgeführt werden. Diese Ausführungsform mit sechs Modulatoren ist natürlich deutlich aufwendiger als die beschriebene Ausführungsform in Verbindung mit Fig. 1 bis 5. Jedoch kann mit einer solchen Ausführungsform ein helleres Farbbild erzeugt werden.

**Patentansprüche**

**1.** Projektionssystem mit

einem ersten Modulator (3), der mehrere Pixel in einer ersten Modulatorfläche aufweist,
einem zweiten Modulator (5), der mehrere Pixel in einer zweiten Modulatorfläche aufweist, und einer Zwischenabbildungsoptik (4), die die erste Modulatorfläche auf die zweite Modulatorfläche abbildet,
wobei die Zwischenabbildungsoptik (4) eine erste Linse (8) mit einer konvexen Seite (F2) aufweist,
**dadurch gekennzeichnet, dass**
die konvexe Seite der ersten Linse (8) als Freiformfläche ausgebildet ist, die nicht sphärisch und nicht rotationssymmetrisch ist und die keine Spiegelsymmetrie aufweist.

2. Projektionssystem nach Anspruch 1,

wobei die x-Achse eines rechtshändigen kartesischen Koordinatensystems mit einer gedachten geraden Verbindungslinie (30), die einen Mittelpunkt der ersten Modulatorfläche und einen Mittelpunkt des durch die Zwischenabbildungsoptik (4) abgebildeten Bildes der ersten Modulatorfläche verbindet, zusammenfällt,
wobei die z-Achse im entfalteten Zustand etwaiger planer Reflexionsflächen sämtlicher optischer Elemente zwischen den Modulatoren (3, 5) senkrecht auf einer Bezugsebene, in der die erste Modulatorfläche liegt, steht und die gedachte gerade Verbindungslinie (20) als Mittelsenkrechte in zwei gleichlange Strecken teilt,
wobei eine Abweichung der konvexen Seite (F2) der ersten Linse (8) von einer spiegelsymmetrischen Ausbildung bezogen auf die y-z-Ebene des rechtshändigen kartesischen Koordinatensystems definiert ist als maximaler Wert des jeweiligen Betrags von Differenzen der z-Werte der konvexen Seite von jeweils zwei zur y-z-Ebene symmetrisch liegenden Punkten auf der konvexen Seite (F2) der ersten Linse (8), und wobei die Abweichung der konvexen Seite der ersten Linse (8) von einer spiegelsymmetrischen Ausbildung bezogen auf die y-z-Ebene des rechtshändigen kartesischen Koordinatensystems so ausgelegt ist, dass der maximale Wert größer oder gleich 1 $\mu$m sowie kleiner oder gleich 100 $\mu$m ist.

3. Projektionssystem nach Anspruch 2,
wobei die Abweichung der konvexen Seite der ersten Linse (8) von einer spiegelsymmetrischen Ausbildung bezogen auf die y-z-Ebene des rechtshändigen kartesischen Koordinatensystems so ausgelegt ist, dass der maximale Wert $\geq$ 3 $\mu$m sowie $\leq$ 20 $\mu$m ist.

4. Projektionssystem nach einem der obigen Ansprüche,
wobei die Zwischenabbildungsoptik (4) so ausgelegt ist, dass das Verhältnis aus halbem Durchmesser eines gedachten kleinsten Kreises, der die komplette erste Modulatorfläche und das gesamte durch die Zwischenabbildungsoptik (4) abgebildete Bild der ersten Modulatorfläche umgibt, zur maximale Ausdehnung eines gedachten kleinsten Quaders, der die optisch genutzten Bereiche sämtlicher optischer Elemente zwischen den beiden Modulatoren (3, 5) einschließt, $\geq$ 0,06 und $\leq$ 0,25 ist.

5. Projektionssystem nach einem der obigen Ansprüche,
wobei die erste und zweite Modulatorfläche jeweils eine rechteckige Fläche von mindestens 31 mm $\times$ 16,4 mm belegen.

6. Projektionssystem nach einem der obigen Ansprüche,
wobei Zwischenabbildungsoptik (4) als 1:1-Abbildungsoptik ausgebildet ist, die eine Verzeichnungskorrektur aufweist, bei der der verbleibende Verzeichnungsfehler kleiner als 5 $\mu$m ist.

7. Projektionssystem nach einem der obigen Ansprüche,
wobei die maximale Ausdehnung eines gedachten kleinsten Quaders, der die optisch genutzten Bereiche sämtlicher optischer Elemente zwischen den beiden Modulatoren (3, 5) sowie die beiden Modulatoren (3, 5) einschließt, kleiner oder gleich 500 mm beträgt.

8. Projektionssystem nach einem der obigen Ansprüche,
wobei die erste Modulatorfläche in einer ersten Ebene liegt und die zweite Modulatorfläche in einer zweiten Ebene liegt und die erste und zweite Ebene um eine Winkel zueinander verkippt sind, der kleiner oder gleich 2° beträgt.

9. Projektionssystem nach einem der obigen Ansprüche,
wobei die erste Linse als Plankonvexlinse (8) ausgebildet ist.

10. Projektionssystem nach einem der obigen Ansprüche,
wobei zwischen den Modulatoren (3, 5) einerseits und der Zwischenabbildungsoptik (4) andererseits eine Umlenkoptik (11) angeordnet ist, die den Strahlengang zwischen der Zwischenabbildungsoptik (4) und dem jeweiligen Modulator (3, 5) zumindest einmal faltet.

11. Projektionssystem nach einem der obigen Ansprüche,
   wobei die beiden Modulatoren (3,5) jeweils als Kippspiegelmatrix ausgebildet sind.

12. Projektionssystem nach Anspruch 11,

   wobei die Kippspiegel jeweils in eine erste und eine zweite Kippstellung schaltbar sind,
   wobei ein Beleuchtungsmodul vorgesehen ist, dass die erste Kippspiegelmatrix (3) so mit Licht beleuchtet, dass die Lichtbeaufschlagung senkrecht zur Modulatorfläche der ersten Kippspiegelmatrix (3) erfolgt, und
   wobei die Zwischenabbildungsoptik (4) das von den sich in der ersten Kippstellung befindenden Kippspiegeln der ersten Kippspiegelmatrix reflektierte Licht unter einem solchen Winkel auf die zweite Kippspiegelmatrix (5) abbildet, dass das von den sich in der ersten Kippstellung befindenden Kippspiegeln der zweiten Kippspiegelmatrix (5) reflektierte Licht senkrecht zur Modulatorfläche der zweiten Kippspiegelmatrix (5) verläuft.

13. Projektionssystem nach einem der obigen Ansprüche,

   wobei die x-Achse eines rechtshändigen kartesischen Koordinatensystems mit einer gedachten geraden Verbindungslinie (30), die einen Mittelpunkt der ersten Modulatorfläche und einen Mittelpunkt des durch die Zwischenabbildungsoptik (4) abgebildeten Bildes der ersten Modulatorfläche verbindet, zusammenfällt,
   wobei die z-Achse im entfalteten Zustand etwaiger planer Reflexionsflächen sämtlicher optischer Elemente zwischen den Modulatoren (3, 5) senkrecht auf einer Bezugsebene, in der die erste Modulatorfläche liegt, steht und die gedachte gerade Verbindungslinie (20) als Mittelsenkrechte in zwei gleichlange Strecken teilt,
   wobei die beiden Modulatorflächen rechteckige Flächen sind und im entfalteten Zustand etwaiger planer Reflexionsflächen sämtlicher optischer Elemente zwischen den Modulatoren (3, 5) in der x-y-Ebene jeweils so angeordnet sind, dass eine Seite der rechteckigen Modulatorfläche mit der y-Achse einen Winkel aus dem Bereich von 10° bis 45° aufweist.

**Claims**

1. A projection system comprising

   a first modulator (3) comprising a plurality of pixels in a first modulator surface,
   a second modulator (5) comprising a plurality of pixels in a second modulator surface, and
   an intermediate imaging optical unit (4), which images the first modulator surface onto the second modulator surface,
   wherein the intermediate imaging optical unit (4) comprises a first lens (8) having a convex side (F2),
   **characterized in that**
   the convex side of the first lens (8) is embodied in the form of a free-form surface, which is not spherical and not rotationally symmetric and does not exhibit any mirror symmetry.

2. The projection system as claimed in claim 1,

   wherein the x-axis of a right-handed Cartesian coordinate system coincides with an imaginary straight connecting line (30) connecting a midpoint of the first modulator surface and a midpoint of the image of the first modulator surface that is imaged by the intermediate imaging optical unit (4),
   wherein the z-axis is located in the unfolded state of any planar reflection surfaces of all the optical elements between the modulators (3, 5) perpendicularly to a reference plane in which the first modulator surface is located, and splits the imaginary straight connecting line (20) as a mid-perpendicular into two portions of equal length,
   wherein a deviation of the convex side (F2) of the first lens (8) from a mirror-symmetric embodiment with respect to the y-z-plane of the right-handed Cartesian coordinate system is defined as a maximum value of the respective absolute value of differences of the z-values of the convex side of in each case two points on the convex side (F2) of the first lens (8) that are located symmetrically with respect to the y-z-plane, and wherein
   the deviation of the convex side of the first lens (8) from a mirror-symmetric embodiment with respect to the y-z-plane of the right-handed Cartesian coordinate system is designed such that the maximum value is greater than or equal to 1 $\mu$m and smaller than or equal to 100 $\mu$m.

3. The projection system as claimed in claim 2,
   wherein the deviation of the convex side of the first lens (8) from a mirror-symmetric embodiment with respect to the y-z-plane of the right-handed Cartesian coordinate system is designed such that the maximum value is $\geq 3$ $\mu$m and $\leq 20$ $\mu$m.

4. The projection system as claimed in one of the preceding claims,
   wherein the intermediate image optical unit (4) is designed such that the ratio of half the diameter of an imaginary smallest circle surrounding the complete first modulator surface and the entire image of the first modulator surface that is imaged by the intermediate imaging optical unit (4) to the maximum extent of an imaginary smallest cuboid enclosing the optically used regions of all the optical elements between the two modulators (3, 5), is $\geq 0.06$ and $\leq 0.25$.

5. The projection system as claimed in one of the preceding claims,
   wherein the first and second modulator surfaces in each case occupy a rectangular surface of at least 31 mm $\times$ 16.4 mm.

6. The projection system as claimed in one of the preceding claims,
   wherein the intermediate imaging optical unit (4) is embodied in the form of a 1:1 imaging optical unit comprising a distortion correction, in which the remaining distortion error is smaller than 5 $\mu$m.

7. The projection system as claimed in one of the preceding claims,
   wherein the maximum extent of an imaginary smallest cuboid enclosing the optically used regions of all the optical elements between the two modulators (3, 5) and the two modulators (3, 5) is smaller than or equal to 500 mm.

8. The projection system as claimed in one of the preceding claims,
   wherein the first modulator surface lies in a first plane and the second modulator surface lies in a second plane, and the first and second planes are tilted relative to one another by an angle that is smaller than or equal to 2°.

9. The projection system as claimed in one of the preceding claims,
   wherein the first lens is embodied in the form of a planoconvex lens (8).

10. The projection system as claimed in one of the preceding claims,
    wherein a deflection optical unit (11), which folds the beam path between the intermediate imaging optical unit (4) and the respective modulator (3, 5) at least once, is arranged between the modulators (3, 5) on one side and the intermediate imaging optical unit (4) on the other side.

11. The projection system as claimed in one of the preceding claims,
    wherein the two modulators (3, 5) are embodied in each case in the form of a tilting mirror matrix.

12. The projection system as claimed in claim 11,

    wherein the tilting mirrors are switchable in each case into a first and a second tilted position, wherein an illumination module is provided, which illuminates the first tilting mirror matrix (3) with light in a manner such that the light impingement is perpendicular to the modulator surface of the first tilting mirror matrix (3), and wherein the intermediate imaging optical unit (4) images the light, which is reflected by the tilting mirrors of the first tilting mirror matrix that are in the first tilted position, onto the second tilting mirror matrix (5) at such an angle that the light reflected by the tilting mirrors of the second tilting mirror matrix (5) that are in the first tilted position travels perpendicularly to the modulator surface of the second tilting mirror matrix (5).

13. The projection system as claimed in one of the preceding claims,

    wherein the x-axis of a right-handed Cartesian coordinate system coincides with an imaginary straight connecting line (30) connecting a midpoint of the first modulator surface and a midpoint of the image of the first modulator surface that is imaged by the intermediate imaging optical unit (4),
    wherein the z-axis is located in the unfolded state of any planar reflection surfaces of all the optical elements between the modulators (3, 5) perpendicularly to a reference plane in which the first modulator surface is located, and splits the imaginary straight connecting line (20) as a mid-perpendicular into two portions of equal length, wherein the two modulator surfaces are rectangular surfaces and are arranged, in the unfolded state of any planar reflection surfaces of all the optical elements between the modulators (3, 5) in the x-y-plane in each case such that one side of the rectangular modulator surface encloses with the y-axis an angle in the range from 10° to 45°.

**Revendications**

1.  Système de projection comprenant

    un premier modulateur (3) qui comporte une pluralité de pixels dans une première surface de modulateur, un deuxième modulateur (5) qui comporte une pluralité de pixels dans une deuxième surface de modulateur, et une optique d'imagerie intermédiaire (4) qui forme une image de la première surface de modulateur sur la deuxième surface de modulateur,
    dans lequel l'optique d'imagerie intermédiaire (4) comporte une première lentille (8) dotée d'une face convexe (F2),
    **caractérisé en ce que**
    la face convexe de la première lentille (8) est réalisée sous la forme d'une surface de forme libre qui n'est pas sphérique et n'est pas symétrique de rotation et qui ne présente pas de symétrie miroir.

2.  Système de projection selon la revendication 1,

    dans lequel l'axe x d'un système de coordonnées cartésien main droite est confondu avec une ligne droite de jonction imaginaire (30) reliant un centre de la première surface de modulateur et un centre de l'image de la première surface de modulateur formée par l'optique d'imagerie intermédiaire (4),
    dans lequel, à l'état déployé d'éventuelles surfaces de réflexion planes de tous les éléments optiques entre les modulateurs (3, 5), l'axe z est perpendiculaire à un plan de référence dans lequel se situe la première surface de modulateur et divise la ligne droite de jonction imaginaire (20) en tant que médiatrice en deux segments de même longueur,
    dans lequel un écart de la face convexe (F2) de la première lentille (8) à une configuration de symétrie miroir par rapport au plan y-z du système de coordonnées cartésien main droite est défini comme étant une valeur maximale de la valeur respective de différences entre les valeurs z de la face convexe de deux points respectifs situés symétriquement par rapport au plan y-z sur la face convexe (F2) de la première lentille (8), et dans lequel l'écart de la face convexe de la première lentille (8) à une configuration de symétrie miroir par rapport au plan y-z du système de coordonnées cartésien main droite est conçu de telle sorte que la valeur maximale soit supérieure ou égale à 1 $\mu$m et inférieure ou égale à 100 $\mu$m.

3.  Système de projection selon la revendication 2,
    dans lequel l'écart de la face convexe de la première lentille (8) à une configuration de symétrie miroir par rapport au plan y-z du système de coordonnées cartésien main droite est conçu de telle sorte que la valeur maximale soit $\geq$ 3 $\mu$m et $\leq$ 20 $\mu$m.

4.  Système de projection selon l'une quelconque des revendications précédentes,
    dans lequel l'optique d'imagerie intermédiaire (4) est conçue de telle sorte que le rapport de la moitié du diamètre d'un plus petit cercle imaginaire, qui entoure la première surface de modulateur complète et la totalité de l'image de la première surface de modulateur dont l'image est formée par l'optique d'imagerie intermédiaire (4), à l'étendue maximale d'un plus petit parallélépipède imaginaire qui englobe les zones utilisées optiquement de tous les éléments optiques entre les deux modulateurs (3, 5) soit $\geq$ 0,06 et $\leq$ 0,25.

5.  Système de projection selon l'une quelconque des revendications précédentes,
    dans lequel les première et deuxième surfaces de modulateur occupent respectivement une surface rectangulaire d'au moins 31 mm $\times$ 16,4 mm.

6.  Système de projection selon l'une quelconque des revendications précédentes,
    dans lequel l'optique d'imagerie intermédiaire (4) est réalisée sous la forme d'une optique d'imagerie 1:1 qui présente une correction de distorsion telle que l'erreur de distorsion restante soit inférieure à 5 $\mu$m.

7.  Système de projection selon l'une quelconque des revendications précédentes,
    dans lequel l'étendue maximale d'un plus petit parallélépipède imaginaire qui englobe les zones utilisées optiquement de tous les éléments optiques entre les deux modulateurs (3, 5) ainsi que les deux modulateurs (3, 5) est inférieure ou égale à 500 mm.

8. Système de projection selon l'une quelconque des revendications précédentes, dans lequel la première surface de modulateur est située dans un premier plan et la deuxième surface de modulateur est située dans un deuxième plan, et les premier et deuxième plans sont inclinés l'un par rapport à l'autre d'un angle qui est inférieur ou égal à 2°.

9. Système de projection selon l'une quelconque des revendications précédentes, dans lequel la première lentille est réalisée sous la forme d'une lentille plan-convexe (8).

10. Système de projection selon l'une quelconque des revendications précédentes, dans lequel, entre les modulateurs (3, 5) d'une part et l'optique d'imagerie intermédiaire (4) d'autre part, est agencée une optique de déviation (11) qui replie au moins une fois le chemin de faisceau entre l'optique d'imagerie intermédiaire (4) et le modulateur (3, 5) respectif.

11. Système de projection selon l'une quelconque des revendications précédentes, dans lequel les deux modulateurs (3, 5) sont respectivement réalisés sous la forme d'une matrice de miroirs basculants.

12. Système de projection selon la revendication 11, dans lequel les miroirs basculants peuvent être respectivement positionnés dans une première et une deuxième position de basculement,

dans lequel il est prévu un module d'éclairage qui éclaire la première matrice de miroirs basculants (3) avec de la lumière de telle sorte que l'exposition à la lumière s'effectue perpendiculairement à la surface de modulateur de la première matrice de miroirs basculants (3), et
dans lequel l'optique d'imagerie intermédiaire (4) forme l'image de la lumière réfléchie par les miroirs basculants de la première matrice de miroirs basculants se trouvant dans la première position de basculement vers la deuxième matrice de miroirs basculants (5) selon un angle tel que la lumière réfléchie par les miroirs basculants de la deuxième matrice de miroirs basculants (5) se trouvant dans la première position de basculement se propage perpendiculairement à la surface de modulateur de la deuxième matrice de miroirs basculants (5).

13. Système de projection selon l'une quelconque des revendications précédentes,

dans lequel l'axe x d'un système de coordonnées cartésien main droite est confondu avec une ligne droite de jonction imaginaire (30) reliant un centre de la première surface de modulateur et un centre de l'image de la première surface de modulateur formée par l'optique d'imagerie intermédiaire (4),
dans lequel, à l'état déployé d'éventuelles surfaces de réflexion planes de tous les éléments optiques entre les modulateurs (3, 5), l'axe z est perpendiculaire à un plan de référence dans lequel se situe la première surface de modulateur et divise la ligne droite de jonction imaginaire (20) en tant que médiatrice en deux segments de même longueur,
dans lequel les deux surfaces de modulateur sont des surfaces rectangulaires et sont respectivement agencées, dans l'état déployé d'éventuelles surfaces de réflexion planes de tous les éléments optiques entre les modulateurs (3, 5) dans le plan x-y, de telle sorte qu'un côté de la surface de modulateur rectangulaire présente avec l'axe y un angle se situant dans la plage de 10° à 45°.

Fig. 1

1

4

2

3

BD

5

6

7

8

9

10

Fig. 2

L1

L2

L4

L5

4

24° 24°

24° 48°

S1

L3

S4

12°

12°

12°

12°

S2

K3

E

K5

S3

Fig. 3

Fig. 4

Fig. 5

Fig. 6

3

5    4, 11    F2

x
↑
→ z

9

Fig. 7

3, 5

9

y
↑
→ z

4, 11    F2

...

Fig. 8

Fig. 9

Fig. 10

Fig. 11

Fig. 12

Fig. 13

Fig. 14

Fig. 15

EP 3 978 983 B1

Fig. 16

31

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   DE 102008029789 A1